# EUROPÄISCHE PATENTSCHRIFT

(11) **EP 0 827 856 B1**
(45) Veröffentlichungstag und Bekanntmachung des Hinweises auf die Patenterteilung: **05.12.2001**
(21) Anmeldenummer: 97250251.2
(22) Anmeldetag: 28.08.1997
(51) Int. Cl.: B60J 7/06

(54) **Omnibus für Stadtrundfahrten, insbesondere Ein- und Doppeldecker**
Bus for sightseeing tours, especially single or double decker
Autobus pour tours touristiques, en particulier avec une et deux plates-formes superposées

(30) Priorität: 30.08.1996 DE 29615592 U; 30.08.1996 DE 29615593 U; 27.08.1997 DE 29715595 U
(43) Veröffentlichungstag der Anmeldung: 11.03.1998
(73) Patentinhaber: Berliner Verkehrsbetriebe (BVG) Anstalt des öffentlichen Rechts, 13357 Berlin (DE)
(72) Erfinder: Meyer, Arthur, 12353 Berlin (DE); Schröter, Eckhard, 13349 Berlin (DE); Stolzenburg, Frank, 16816 Neuruppin (DE)
(74) Vertreter: COHAUSZ HANNIG DAWIDOWICZ & PARTNER

(56) Entgegenhaltungen:
- DE-C- 269 819
- GB-A- 289 222
- GB-A- 330 391

## Beschreibung

Die Erfindung betrifft einen Doppeldecker-Omnibus für Stadtrundfahrten, mit einem Fahrerhaus, das in die selbsttragende Karosserie mit Seitenwände und Heckwand integriert ist, einem das Deck ganz oder teilweise überdeckenden Panoramadeckteil, dessen Dachaufbau sich an einem aus Horizontal- und Vertikalstreben bestehenden Halterahmen oder den Seitenwänden abstützt.

Für Stadtrundfahrten werden bekanntlich neben ein- auch doppelstöckige Omnibusse eingesetzt, deren Deck als Panoramateil ausgebildet ist. Das umlaufende Geländer, in das eine Sichtwandverkleidung integriert ist, ermöglicht einen umfassenden Rundblick.
Der Panoramateil besitzt kein Dach und ist offen, so dass bei Wind und Regenschauern oder auch zu starker Sonneneinstrahlung die Fahrgäste ungeschützt sind.
Der Einsatz dieser Omnibusse bleibt daher weitgehend auf schöne Wetterperioden begrenzt.

Um diese Nachteile zu vermeiden hat man in der DE 34 20 171 A1 versucht, in das Dach eines Busses ein rollladenähnliches zu- und aufrollbares Verschlussglied zu integrieren, wobei das Öffnen des Daches durch Aufrollen des Verschlußgliedes auf einer Rolle erfolgt, die sich in einem Stauraum unter dem Dach befindet.

Auch andere bekannte Lösungen behalten im wesentlichen die tragenden Elemente der Dachkonstruktion bei und gestalten entweder den Dachteil als Jalousie (US-PS 4 210 360) oder als über die Dachhaut hinausgehenden ein- bzw. ausziehbaren Teil (US-PS 3 619 001, US-PS 3 770 314) bzw. als eine luftdurchlässige durchsichtige Bahn (DE 909 892).
Jalousien sind kompliziert in ihrem Aufbau und im rauhen Fahrbetrieb eines öffentlichen Verkehrsmittels störanfällig. Da außerdem die Dachkonstruktion mit ihren Fensterholmen im wesentlichen beibehalten wird, ist eine ungestörte Rundumsicht nicht gewährleistet, wenn bei Stadtrundfahrten auf Sehenswürdigkeiten hingewiesen wird und vom fahrenden Fahrzeug diese Sehenswürdigkeit fotografiert oder als Video aufgenommen werden soll.

Besonders diejenigen Fahrgäste sind dann benachteiligt, die unmittelbar am Fensterholmbereich sitzen. Durch den Türein- und -austritt geht außerdem wertvolle Sitzfläche verloren. Ein weiterer Nachteil besteht darin, dass durch die bisherige geschlossene Form des Fahrgastteiles diese Omnibusse ein erhebliches Eigengewicht besitzen.

Zusammenschiebbare Verdecks für Lastkraftwagen, Anhänger oder Container sind hinlänglich bekannt (DE-G 91 08 115.7). Diese bestehen aus zwei sich über die Länge der Fahrzeugpritsche oder des Fahraufsatzes hin erstreckende Laufschienen und einer Vielzahl an diesen vermittels Rollwagen und Stützstreben längsverschiebbar und höhenveränderlich abgestützter, eine Verdeckplane unterstützenden Spriegeln, wobei die Stützstreben jeweils paarweise zu Gruppen zusammengefaßt und gelenkig untereinander verbunden sind sowie jeweils paarweise einen Spriegel tragen und wobei sich die gelenkig miteinander verbundenen Stützstreben jeden Paares bei geschlossenem Verdeck in einer wenigstens annähernden Strecklage befinden. Diese bekannten zusammenschiebbaren Verdecks haben bisher keine Anwendung für Omnibusse gefunden, weil das Endlaufteil der Laufschienen in unmittelbarer Nähe des Fahrerhauses befestigt werden muss, so dass sich Rollwagen, Stützstreben und Spriegel mit Verdeckplane in Fahrtrichtung verschließen lassen. Die immerhin nicht zu vernachlässigenden Abmessungen der zusammengeschobenen Verdeckplane mit den sie tragenden Stützen, Spriegeln und Rollwagen beeinträchtigen die Rundumsicht gerade im Vorderteil des Panoramadecks.

Andererseits haben Panoramadecks von Bussen regelmäßig verglaste Seitenfenster, die ebenfalls die freie Sicht einschränken. Busse, die wiederum keine Fenster besitzen, lassen den Fahrgast im Falle von Witterungsunbilden ungeschützt.

Aus der gattungsgemäßen GB-A-0 330 391 ist ein eindeckiger Omnibus bekannt, dessen Dach mit einem Schiebeverdeck versehen ist. Auf zwei parallel liegenden u-profilförmigen Laufschienen laufen in horizontaler Lage Rollwagen, an denen Spriegel befestigt sind, welche die Verdeckplane tragen. Die Rollwagen besitzen obere und innere Rollen, die beim Ausziehen oder Zusammenschieben der Verdeckplane im U-Profil entlang gleiten. Die gesamte Last bei der Verschiebebewegung liegt dabei auf der inneren Rolle des Rollwagens, so dass hier erhöhter Verschleiß auftritt. Die Verschiebebewegung der Verdeckplane wird dadurch schwergängig.

Bei diesem Stand der Technik liegt der Erfindung die Aufgabe zugrunde, einen Omnibus für Stadtrundfahrten zu schaffen, dessen Panoramadeck mit einem nicht störenden, schließ- und öffnungsbaren Dach als auch die Öffnungen in den Seitenwände mit schließ- und öffnungsbaren Sichtelemente ein Höchstmaß an ungestörter Rundumsicht bei optimal zu nutzenden Fahrgastvolumen und hohem Komfort ermöglicht, der zugleich durch Senkung des Fahrzeuggewichtes wirtschaftlicher betreibbar ist, wobei die Verschiebebewegung der Verdeckplane leichtgängig bei geringem Verschleiß möglich wird.

Diese Aufgabe wird dadurch gelöst, dass das Dach des Panoramadeckteils aus einem an sich bekannten Schiebeverdeck gebildet ist, dessen Laufschienen und Rollwagen insgesamt in einer zueinander nach innen gekippten Schräglage angeordnet sind, die der Dachneigung entspricht, und dass die Laufschienen einen Führungssteg aufweisen, an denen sich innere und äußere Führungsrollen in der Schräglage abstützen, wobei ihre Rollenachsen zueinander senkrecht stehen.

In einer vorteilhaften Ausführungsform der Erfindung erstrecken sich die Laufschienen über die gesamte Länge des Halterahmens bzw. der Dachöffnung erstrecken. Dies ermöglicht ein leichtes Gleiten der Rollwagen und damit der Verdeckplane entlang den Laufschienen.

In einer weiteren bevorzugten Ausführungsform der Erfindung ist die Schließrichtung des Schiebeverdecks entgegen der Fahrtrichtung gewählt. Natürlich ist es auch möglich, ohne die Erfindung zu verlassen, die Schließrichtung in Fahrtrichtung vorzusehen.

Für die durchaus leichtere Konstruktion eine; Halterahmensaufbaus ohne Dach auf dem Deck des erfindungsgemäße Omnibusses sind die die Gelenkbänder tragende Rollwagen auf dei Laufschienen kugellagergelagert.

In weiterer vorteilhafter Ausgestaltung der Erfindung sind die auf den Laufschienen benachbart angeordneten Rollwagen untereinander jeweils durch ein flexibles Gelenkband und die auf den beiden Laufschienen gegenüberliegend angeordneten Rollwagen jeweils durch einen Spriegel verbunden.

Die Spriegel sind dann insgesamt bogenförmig ausgebildet. Der Bogen muss nur der Dachneigung entsprechen, d.h. 4 bis 6° betragen.

In einem weiteren bevorzugten Merkmal der Erfindung sind die Seitenabschnitte der Spriegel direkt an der Rollwagenaußenwand drehbar gelagert. Dies hat den Vorteil, dass trotz der von der Laufschiene und dem Rollwagen eingenommenen Schräglage die Spriegel direkt von einer Bohrung der Rollwagenaußenwand aufgenommen werden können, ohne dass weitergehende Anpassungen notwendig sind.

Natürlich gehört es auch zu der Erfindung, wenn die Seitenabschnitte der Spriegel mit einer der Schräglage entsprechenden Abbiegung versehen sind, an der die Lagerung des Spriegelendes in der Bohrung der Rollwagenaußenwand erfolgt.
Für diesen Fall beträgt die Abbiegung 4 bis 6°. Die innere Führungsrolle ist als eine Kegelrolle mit einem der Dachneigung entsprechenden Öffnungswinkel ausgebildet und die äußere Führungsrolle ist dann unter einem der Dachneigung entsprechenden Winkel am Rollwagen angelenkt, wobei die Seitenabschnitte der Spriegel horizontal an der Rollwageninnenwand drehbar angeordnet ist.

Die Spriegelenden können aber auch als separate, jeweils eine der Dachneigung entsprechende Abschrägung aufweisende, mit ihrer Achse in einer Schrägbohrung der äußeren Rollwagenwand gelagerte Endteile ausgebildet sein, zwischen denen der Spriegel seinerseits drehbar gelagert ist. Die Verdeckplane ist dann durch ein keilförmiges Zwischenstück an der oberen Rollwagenwand in horizontaler Lage gehalten. Die gewählte Abschrägung muß nur der Dachneigung entsprechen.
Noch einfacher und vorteilhafter ist es, wenn an der äußeren Rollwagenwand ein Tragarm unter dem Winkel der Dachneigung befestigt ist, wobei zwischen den sich gegenüberliegenden Tragarmen eines Rollwagenpaares der Spriegel drehbar angeordnet ist.
Die Anpassung wird auch erreicht, wenn die äußere Führungsrolle als eine Kegelrolle mit einem der Dachneigung entsprechenden Öffnungswinkel ausgebildet und die innere Führungsrolle unter einem der Dachneigung entsprechenden Winkel am Rollwagen angelenkt ist, wobei die Seitenabschnitte der Spriegel in einer Bohrung in der Rollwageninnenwand drehbar gelagert sind.

Die flexiblen Gelenkbänder stellen sicher, dass die Rollwagen sehr eng zusammengeschoben werden können, so dass der Platz für die zusammengeschobene Verdeckplane minimiert werden kann.

Die Oberkante der Dachöffnung ist mit einem Kantenprofil versehen, an dem die Laufschienen angesetzt und verschweißt oder verschraubt sind.

Die Verdeckplane besteht in weiterer bevorzugter Ausgestaltung der Erfindung aus reißfestem Kunststoff.

Für die Fixierung der Verdeckplane in einer teilweise oder vollkommen offenen Stellung sind Feststeller vorgesehen, die an den Laufschienen montiert werden, um die Rollwagen in ihrer Lage zu blockieren.

Die Spriegel, die unmittelbar der Heckwand und der Vorderwand gegenüberliegen, weisen eine federbelastete Stiftver- und -entriegelung auf, die in eine Bohrung im Führungssteg der Laufschiene sichernd eingreift und entgegen der Federkraft wieder lösbar ist. Dadurch ist jeweils der letzte Spriegel an der Laufschiene gehalten.

In weiterer bevorzugter Ausgestaltung der Erfindung ermöglicht eine Zugeinrichtung, die handbetätigt und/oder motorgetrieben sein kann, das leichte Öffnen und Schließen der Verdeckplane in der Dachöffnung bzw. im Halterahmen.

Nach einem weiteren Merkmal des erfindungsgemäßen Omnibusses ohne Dachaufbau ist als verschließ- und öffnungsbares Sichtelement für die Seitenöffnung eine in einem mehrkammerigen Rahmenprofil geklemmte Verglasung vorgesehen.

In einer zweckmäßigen Ausführungsform der Erfindung besteht die Verglasung aus separat voneinander getrennten, in waagerechten Gleitschienen aneinandergereihten und zu einem Paket gegen einen Anschlag zusammenlegbaren Klapp-Teilen. Die Gleitschienen sind mit ihren Gleitöffnungen zueinander ausgerichtet und in vertikaler Flucht übereinanderliegend angeordnet.
Zwischen diesen Gleitschienen sind in weiterer Ausgestaltung der Erfindung die Klapp-Teile verschiebbar und jeweils in ihrer Anschlaglage einerends drehbar und anderenends in das Innere des Decks einschwenkbar angeordnet.
Dadurch ist sichergestellt, dass die gesamte Seitenöffnung geöffnet werden kann, so dass ein ungestörter Rundumblick gewährleistet bleibt. Die Heckwand des Fahrzeuges bildet den Anschlag, wodurch die eingeklappten Klapp-Teile der Verglasung nicht stören.

Nach einer weiteren bevorzugten Ausführungsform der Erfindung ist die an den Laufschienen befestigte obere Gleitschiene aus einem einseitig zum Inneren der Seitenöffnung hin offenes Kastenprofil gebildet, dessen der Laufschiene zugewandte geschlossene Kastenwand mit einer senkrecht in das Innere des Profils hineinragenden Führungswand versehen ist, der eine senkrecht zu dieser Führungswand angeordnete innere Gleitfläche zugeordnet ist, die sich horizontal verlaufend auf der der Laufschiene abgewandten, mit der Gleitöffnung versehenen Kastenwand befindet, und dass die am Anschlußprofil befestigte untere Gleitschiene aus einem ebenfalls zum Inneren der Seitenöffnung hin offenen, die Gleitöffnung aufweisenden Kastenprofil besteht.

Für jedes Klapp-Teil sind in weiterer Ausgestaltung der Erfindung zwei im Inneren der Gleitschiene von der Führungswand geführte und auf der Gleitfläche bewegbare, voneinander beabstandete Rollmechanismen vorgesehen, von denen der hintere dem Anschlag zugewandte Rollmechanismus mit einem am oberen Rahmenprofil des Klapp-Teils ortsfest befestigten Führungsstift drehbar verbunden ist, dem ein mit seiner Achse fluchtender, am unteren Rahmenprofil des Klapp-Teiles ebenfalls ortsfest befestigter zweiter, in die Gleitöffnung der unteren Gleitschiene drehbar eintauchender Führungsstift zugeordnet ist, und dass der vordere dem Anschlag abgewandte Rollmechanismus mit einem, im oberen Rahmenprofil auf unterschiedliche Länge einstellbaren, arretier- und lösbaren Führulgsstift versehen ist, dem ein weiterer im unteren Rahmenprofil auf unterschiedliche Länge einstell-, arretier- und lösbarer Führungsstift zugeordnet ist.

Die einzelnen Klapp-Teile werden einzeln mit den Rollmechanismen auf der Gleitfläche der Gleitschiene in Richtung Anschlag verschoben, bis die auf einen entsprechende Abstand eingestellten Führungsstifte nach einem weiteren Merkmal der Erfindung in Höhe einer vom Anschlag beabstandeten Aussparung in den seitlichen Begrenzungswänden der oberen und unteren Gleitschienen zu liegen kommen. Das Klapp-Teil wird sodann um seine beiden, im oberen und unteren Rahmenprofil befesltigten ortsfesten Führungsstifte in Richtung des Innenraumes des Decks gedreht und vollkommen nach innen umgeklappt. Der vordere Rollmechanismus mit seinem oberen Führungsstift und der zugeordnete untere Führungsstift schwenkt dabei aus der Gleitschiene durch die Aussparungen heraus.

Die individuelle Einstellbarkeit der vorderen Führungsstifte eines jeden Klapp-Teiles ermöglicht es, die sich ergebenen unterschiedlichen Abstände von Führungsstift zur Aussparung für jedes einzelne Klapp-Teil exakt einzustellen.

Für ein problemloses Verschieben der einstellbaren Führungsstifte der einzelnen Klapp-Teile sind diese nach einer weiteren Ausgestaltung der Erfindung mit einer Buchse versehen, die ein leichtes und sicheres Abrollen bzw. Gleiten in den Gleitschienen gewährleistet.

Die obere Gleitschiene weist nach einem weiteren Merkmal der Erfindung auf ihrer der Laufschiene abgewandten offenen Kastenwand eine Befestigungsnut auf, in der eine das Rahmenprofil der Verglasung abschirmende Dichtung befestigt ist.

Eine weitere bevorzugte Ausführungsform der Erfindung sieht am unteren Rahmenprofil der Verglasung eine Befestigungsnut vor, in der eine die untere Gleitschiene abschirmende Dichtung angeordnet ist. Diese Dichtungen, die vorzugsweise pinselartig ausgebildet sind, erschweren das Eindringen von Feuchtigkeit in das Innere der Gleitschienen.

Eine weitere Ausführungsform der Erfindung sieht vor, dass die untere Gleitschiene nahe den Vertikalstreben auf dem waagerechten Wandteil des Anschlussprofils und dem Schenkel eines den waagerechten Wandteil gleichsam verlängernden Winkelprofils aufgesetzt verbunden ist, wobei der andere Schenkel des Winkelprofils an der zur inneren Beplankung gelegenen Wandseite des Anschlussprofils befestigt ist, und dass die obere Gleitschiene direkt an der dem Führungssteg abgekehrten waagerecht verlaufenden äußeren Wand der Laufschiene befestigt ist.

Als Sichtelement kann in weiterer bevorzugter Ausgestaltung der Erfindung eine ganz oder teilweise über die Länge der Seitenöffnung sich erstreckende Folie vorgesehen sein, die um eine an der Laufschiene montierte Kederleiste auf- und abrollbar befestigt ist. Die abgewickelte Folie verschließt die Sleitenöffnung über ihre gesamte Länge und wird am Anschlußprofil entsprechend eingehakt.

Nach einem weiteren bevorzugten Merkmal der Erfindung sind auch mehrere in der Seitenöffnung nebeneinander horizontal angeordnete Rollos als Sichtelement geeignet, deren vertikale Seitenränder in vertikal zwischen Laufschiene und Anschlußprofil angeordneten Führungsschienen geführt sind.
Nach einer weiteren Ausführungsform sind mehrere in der Seitenöffnung nebeneinander vertikal angeordnete Rollos vorgesehen, deren vertikale Ränder durch Klettverschluss verbunden sind.

In weiterer Ausgestaltung der Erfindung erstreckt sich der überdachte Teil des Decks auf wenigstens 25 bis 75% des Fahrzeuges, wobei der dachlose Teil seitlich offen ausgebildet ist.

Mit all diesen Merkmale wird erreicht, dass bei der Durchführung von Stadtrundfahrten die Fahrgäste auf dem Deck einen wesentlich besseren Wetterschutz ohne einschränkende Rundumsicht vom Deck aus haben.

Der erfindungsgemäße Omnibus hat gegenüber den bekannten Fahrzeugen ein wesentlich geringeres Gewicht. Dies senkt den spezifischen Kraftstoffverbrauch.

Weitere Vorteile und Einzelheiten ergeben sich aus der nachfolgenden Beschreibung unter Bezugnahme auf die beigefügten Zeichnungen.

Es zeigen:
- Fig. 1: eine schematische Seitenansicht des erfindungsgemäßen Doppeldecker-Omnibusses ohne Dach mit vollkommener Öffnung des Panoramadachs,
- Fig. 2: eine schematische Seitenansicht des erfindungsgemäßen Doppeldecker-Omnibusses ohne Dach mit teilweiser Öffnung des Panoramadachs,
- Fig. 3: eine schematische Seitenansicht des erfindungsgemäßen Doppeldecker-Omnibusses mit vollkommen geschlossenem Panoramadach,
- Fig. 4: einen Schnitt entlang der Linie A-A der Fig. 1 bis 3,
- Fig. 4.1 und 4.2: eine Schnittdarstellung der Gleitschienen,
- Fig. 5: eine perspektivische Ansicht des Schiebeverdecks,
- Fig. 6: Varianten von Spriegelarten,
- Fig. 7: einen Schnitt durch die Stiftver- und -entriegelung in Offenstellung,
- Fig. 8: einen Schnitt durch die Stiftver- und -entriegelung in Schließstellung,
- Fig. 9: eine schematische Darstellung der aneinandergereihten Klapp-Teile der Verglasung in der Seitenwandöffnung des Omnibusses,
- Fig. 10: einen Schnitt durch einen Führungsstift mit Buchse,
- Fig. 11: eine schematische Darstellung der Klapp-Teile der Verglasung in eingeklappter Lage,
- Fig. 12.1 bis 12.3: Varianten der Sichtelemente in der Seitenöffnung des Omnibusses,
- Fig. 13: eine schematische Seitenansicht eines erfindungsgemäßen Doppeldecker-Omnibusses mit Dachaufbau in Offenstellung,
- Fig. 14: eine schematische Draufsicht des erfindungsgemäßen Doppeldecker-Omnibusses gemäß Fig. 13,
- Fig. 15: einen Schnitt entlang der Linie B-B der Fig. 12,
- Fig. 16: eine perspektivische Ansicht des Schiebeverdecks,
- Fig. 17: einen Schnitt durch die schräggestellte Laufschienen-Rollwagenanordnung mit Spriegelverbindung und
- Fig. 18.1 bis 18.3: Varianten der Lagerung der Spriegelenden am Rollwagen.

Die Erfindung soll nachstehend an zwei Beispielen eines Doppeldecker-Omnibusses näher erläutert werden.

### Beispiel 1

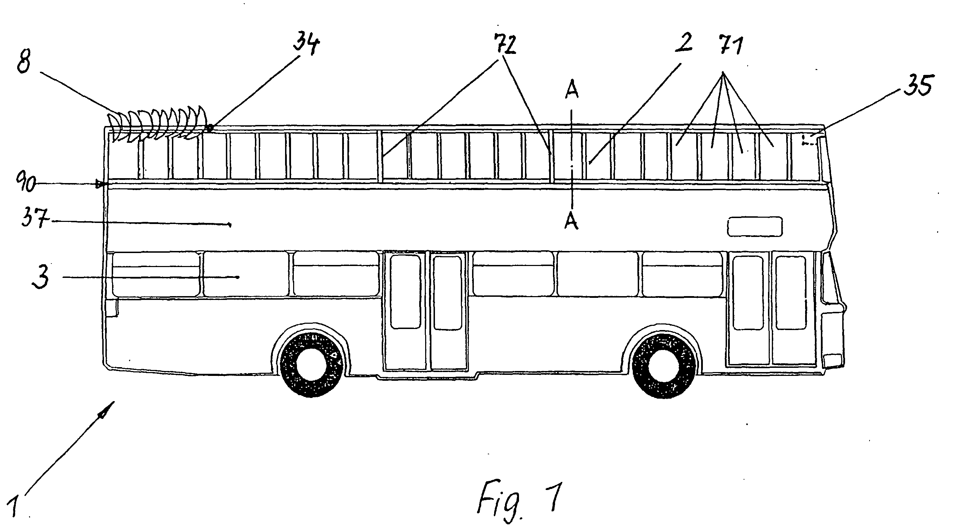

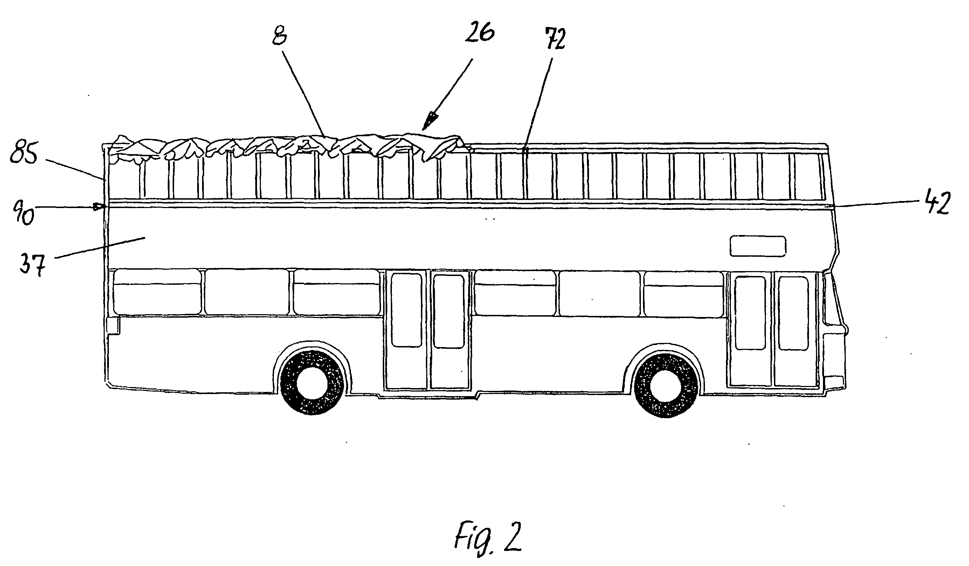

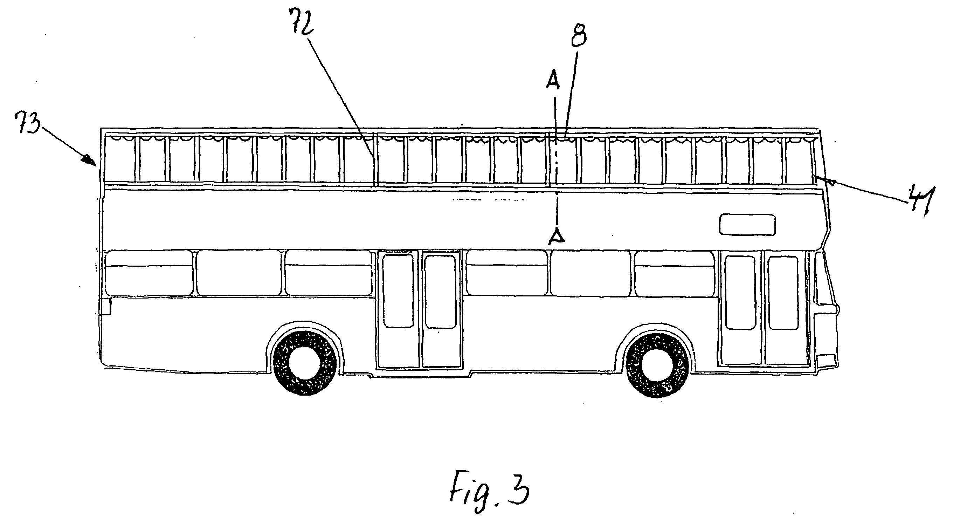

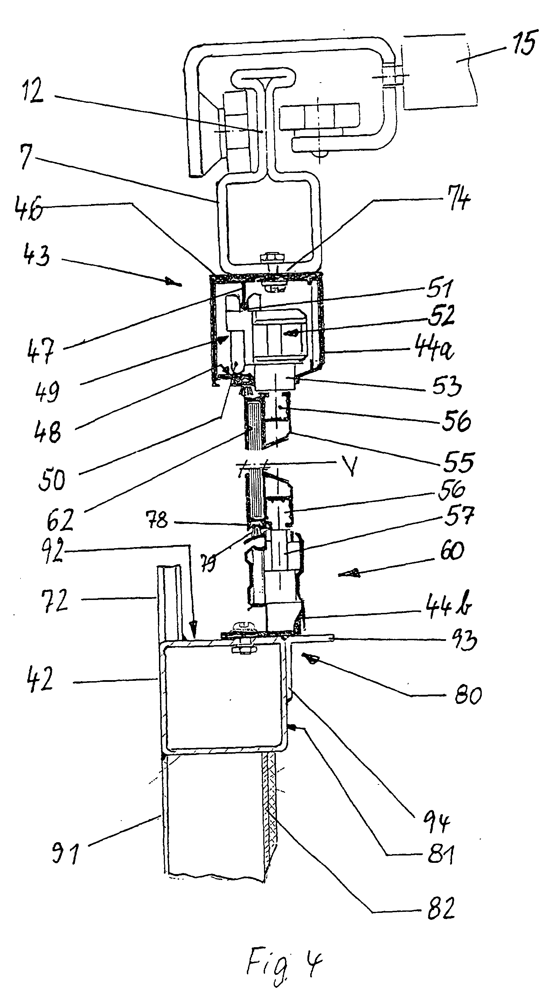

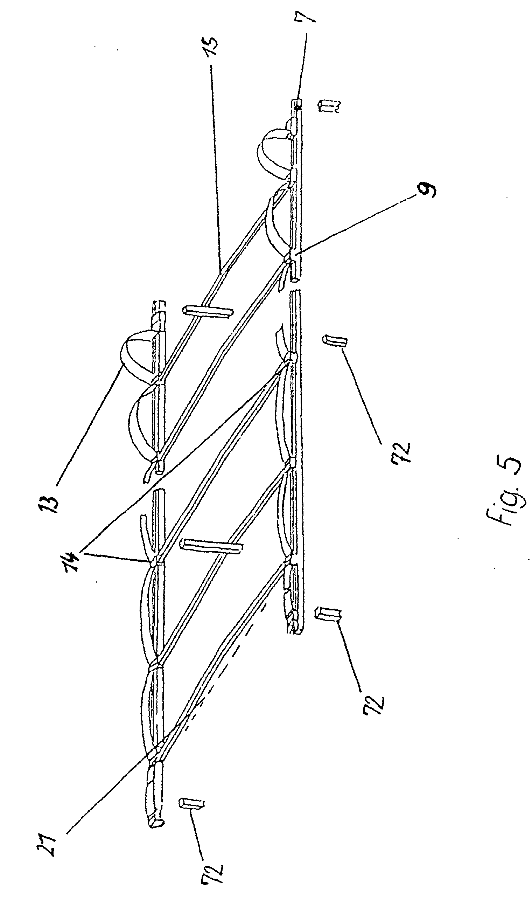

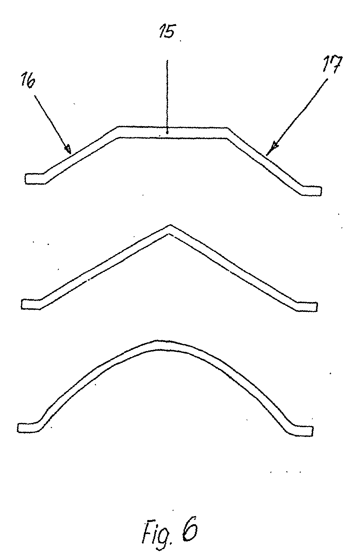

Der erfindungsgemäße Doppeldecker-Omnibus **1** besteht im ersten Beispiel aus einem Panoramadeckteil **2** und einem Unterdeckteil **3** (Fig. 1 bis 3). Der Panoramadeckteil **2** entspricht in seinem Aufbau dem bekannten Doppeldecker-Omnibus und bedarf deshalb keiner näheren Erläuterung.
Der Zugang der Fahrgäste in den Panoramadeckteil **2** erfolgt über eine nicht dargestellte Treppe vom Unterdeckteil **3** aus. Der Panoramadeckteil **2** ist von umlaufenden speziell verstärkten Seitenwänden **37** gebildet, deren Oberkante **90** durch ein kastenförmiges Anschlußprofil **42** verstärkt ist.

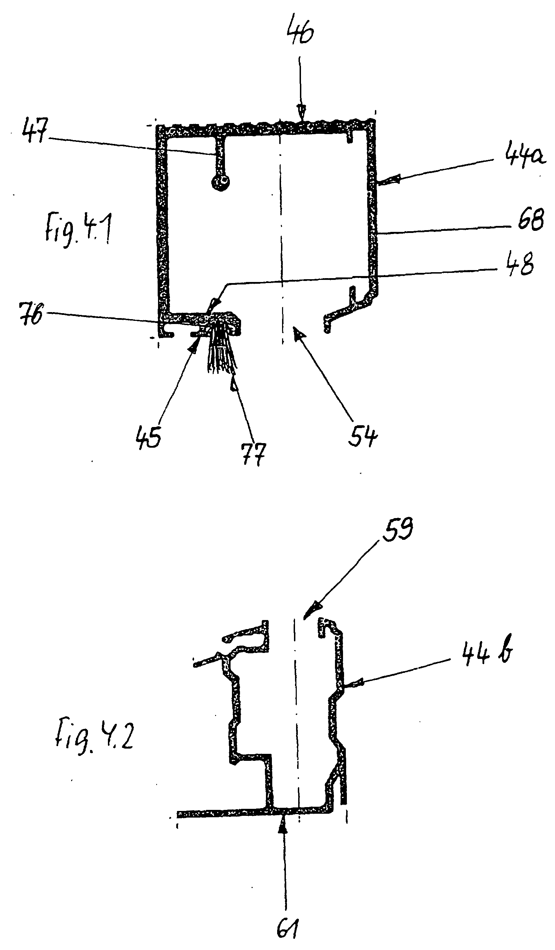

Die Fig. 4, 4.1, 4.2, 5 und 6 gehören dem Stand der Technik an, und sollen das Verständnis der Erfindung erleichtern.
Der Unterteil des Anschlußprofils **42** ist mit der Beplankung **91** der Seitenwände **37,** beispielsweise durch Schweißung, verbunden (siehe Fig.4).
Entlang der Oberkante **90** der Seitenwand **37** und der Heckwand **85** ist ein Halterahmen **73** am kastenförmiges Anschlußprofil **42,** beispielsweise durch Verschweißen befestigt.
Dieser Halterahmen **73** ist gebildet aus Vertikalstreben **72** und Laufschienen **7.** Die vorderen, mittleren und hinteren Vertikalstreben **72** sind verlängert ausgebildet und tragen unterendig jeweils die parallel zueinander liegenden Laufschienen **7** des Schiebeverdecks **26** (siehe Fig. 5).
Auf den Laufschienen **7** sind die Rollwagen **9** längsverschieblich mittels Kugellager geführt. Jeweils zwei auf einer Laufschiene **7** sind untereinander durch flexible Gelenkbänder **13** miteinander verbunden. Die Rollwagen **9** eines Rollwagenpaares **14** sind jeweils durch einen Spriegel **15** verbunden, wobei die Seitenabschnitte **16** und **17** eines Spriegels **15** jeweils an den Rollwagen **9** eines Rollwagenpaares **14** drehbar gelagert sind. Die Seitenabschnitte **16** und **17** besitzen eine Abbiegung **21,** deren Neigung der ursprünglichen Dachneigung des Omnibusses von etwa 5° entspricht.
Mögliche Spriegelformen sind in Fig. 6 dargestellt, erheben aber keinen Anspruch auf Vollständigkeit.

An den Spriegeln **15** ist die Verdeckplane **8** lösbar befestigt, so dass durch Verfahren der Rollwagen **9** auf den Laufschienen **7** die Verdeckplane **8** das Dach des Panoramadeckteils **2** vollkommen oder teilweise abschließen kann (siehe Fig. 1 bis 3).

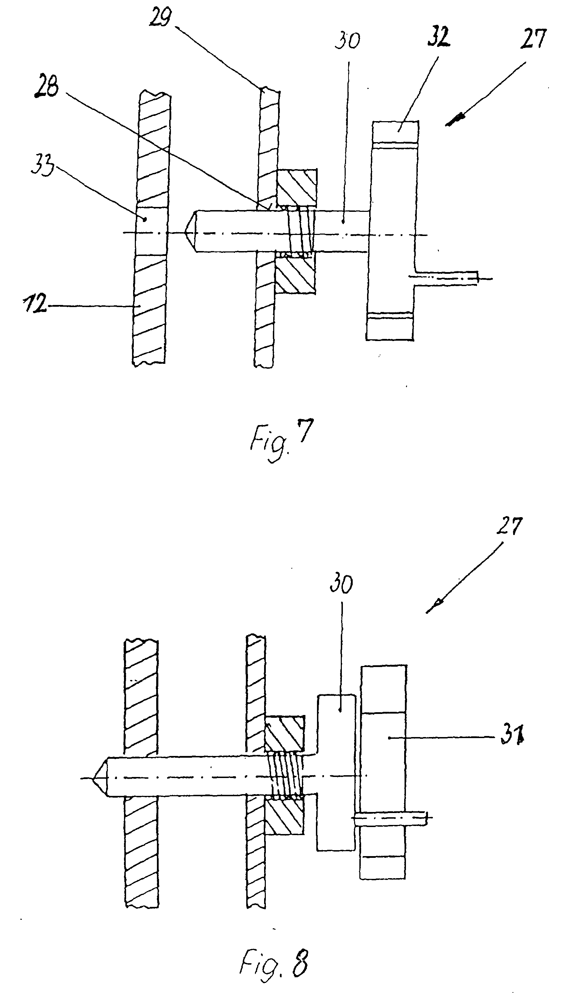

Beide Seitenabschnitte **16** und **17** des jeweils der Heckwand und auch der nicht bezeichneten Vorderwand gegenüberliegenden Spriegels **15** weisen je eine federbelastete Stiftver- und -entriegelung **27** auf, so dass der Spriegel **15** von der Laufschiene **7** gelöst oder an der Laufschiene **7** arretiert werden kann (Fig. 7 und 8).

Die Stiftver- und -entriegelung **27** besteht aus einem in einer Bohrung **28** eines, an den Seitenabschnitten **16** und **17** des Spriegels **15** befestigten Tragarmes **29** gehaltenen, durch Federkraft vorgespannten Bolzen **30,** der über ein um den Bolzen **30** drehbares, eine Aussparung **31** aufweisendes Ver- und Entriegelungsglied **32** in eine Bohrung **33** im Führungssteg **12** der Laufschiene **7** sichernd einrastet.
Der jeweils letzte, der Heckwand zugewandte Spriegel **15** ist somit in seiner Position gehalten und kann nicht mehr verschoben werden. Gleiches gilt sinngemäß für den Spriegel **15,** der der Vorderwand gegenüberliegt.
Wird der Bolzen entgegen der Federkraft angehoben, kann das Ver- und Entriegelungsglied **32** soweit gedreht werden, dass der Bolzen **30** genau in die Aussparung **31** paßt und die Arretierung ist gelöst.
Auf den Laufschienen **7** lassen sich Feststeller **34** montieren, die die Rollwagen **9** an ihrer Längsverschiebung hindern.

Um ein leichtes Öffnen oder Schließen der Verdeckplane **8** zu bewerkstelligen, ist eine Zugeinrichtung **35** vorgesehen, mit deren Hilfe die Verdeckplane **8** auf den Laufschienen **7** bewegt wird.

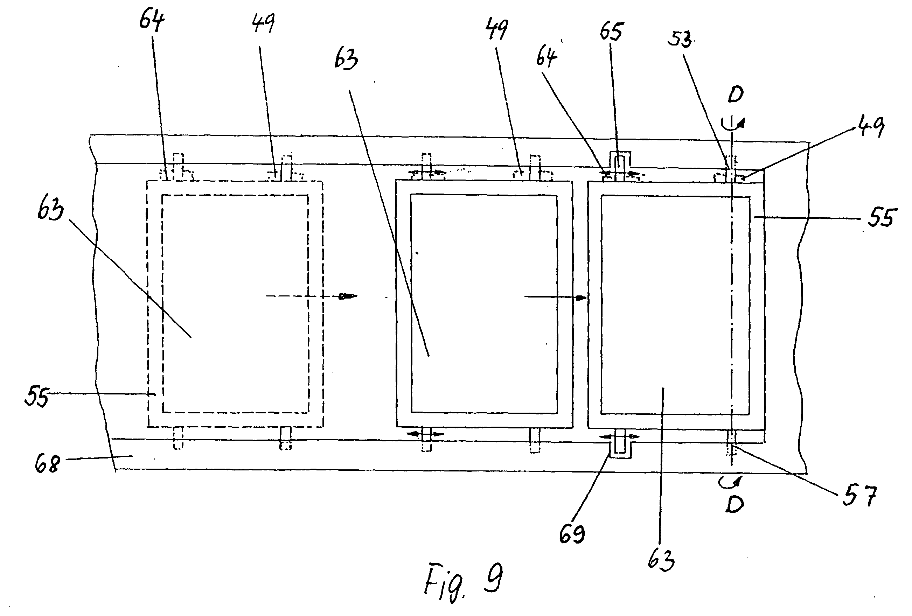

Wie in Fig. 4 und 9 gezeigt, ist die dem Dach zugewandte obere Gleitschiene **43** in waagerechter Einbaulage am horizontalen äußeren, dem Führungssteg **12** gegenüberliegenden Wandteil **74** der Laufschiene **7** festgeschraubt. Die obere Gleitschiene **43** ist ein einseitig offenes Kastenprofil **44a** (siehe Fig. 4.1), dessen vorderer geöffneter Wandbereich **45** in das Innere der Seitenöffnung **41** gerichtet ist. Die der Laufschiene **7** zugekehrte hintere Wand **46** hat eine in das Innere des Profils **44a** senkrecht hineinragende Führungswand **47.**
Gegenüber dieser Führungswand **47** ist eine dazu senkrecht ausgerichtete innere Gleitfläche **48** auf dem Wandbereich **45** ausgebildet.
In das Kastenprofil **44a** ist ein Rollmechanismus **49** so eingeschoben, dass die Gleitrolle **50** des Rollmechanismus **49** auf der Gleitfläche **48** zu liegen kommt und die Führungswand **47** in eine zur Gleitrolle **50** parallel versetzte Führungsnut **51** eingreifen kann. Der Rollmechanismus **49** hat eine Aufnahme **52,** in der ein Führungsstift **53** drehbar gelagert ist. Dieser Führungsstift **53** greift durch die Gleitöffnung **54** der Wand **45** hindurch und ist mit dem oberen Rahmenprofil **55** der Verglasung ortsfest verbunden.

Das dem drehbar gelagerten Ende gegenüberliegende andere Ende des Eührungsstiftes **53** wird hierzu in einer Kammer **56** des oberen Rahmenprofils **55** geführt und dort fixiert, beispielsweise durch Verkleben, Verschrauben oder Verschweißen.
Das Kastenprofil **44a** besitzt eine Befestigungsnut **76,** in der eine fadenförmige Dichtung **77** befestigt ist, die die Rollmechanismen **49** und **64** vor Feuchtigkeitszutritt schützen.

In Achsflucht **D** des drehbar im Rollmechanismus **49** gelagerten ersten Führungsstiftes **53** ist in der Kammer **56** des unteren Rahmenprofils **55** ein zweiter Führungsstift **57** ortsfest gehalten.
Dieser zweite Führungsstift **57** greift mit seinem freien Ende **58** in die Gleitöffnung **59** der unteren waagerechten Gleitschiene **60** ein, die aus einem Kastenprofil **44b** gebildet wird (siehe Fig. 4.2).

Beide Führungsstifte **53** und **57** liegen auf der Achse **D,** so dass ein Drehen um diese Achse sichergestellt ist.

Die untere Gleitschiene **60** ist ebenso wie die obere einseitig offen und mit ihrer Gleitöffnung **59** in das Innere der Seitenöffnung **41** hin ausgerichtet.
An der zur inneren Beplankung **82** gerichteten Wandseite **81** des Anschlussprofils **42** ist ein Winkelprofil **80** befestigt, das den horizontalen Wandteil **92** des Anschlußprofils **42** gleichsam etwas in das Innere des Decks waagerecht verlängert. Die untere Gleitschiene **60** ist in waagerechter Einbaulage auf dem waagerechten Wandteil **92** des Anschlußprofils **42** und dem horizontal verlaufenden Schenkel **93** des Winkelprofils **80** aufgelegt und mit ihrer Rückwand **61** an dem waagerechten Wandteil **92** festgeschraubt. Der andere senkrechte Schenkel **94** des Winkelprofils **80** ist mit der Wandseite **81** des Anschlußprofils **42** verschweißt.
Die obere Gleitschiene **43** ist senkrecht zu der unteren Gleitschiene **60** ausgerichtet, so dass ihre Gleitöffnungen **54** und **59** genau miteinander fluchten. Befestigt ist die obere Gleitschiene **43** an der dem Führungssteg **12** abgekehrten waagerecht verlaufenden Wandteil **74** der Laufschiene **7.**

An der der äußeren Blechhaut zugewandten Seite des unteren Rahmenprofils **55** befindet sich auch eine Befestigungsnut **78** für eine Dichtung **79,** die die untere Gleitschiene **60** vor Feuchtigkeit schützt.

Das Rahmenprofil **55** umgreift mit seiner Kammer **62** die Verglasung, beispielsweise aus Polycarbonatglas. Mehrere von dem Rahmenprofil **55** umgriffene Verglasungen bilden Sichtelemente **71,** die sich aus separaten Klapp-Teilen **63** zusammensetzt (Fig. 9). Jedes dieser Klapp-Teile **63** ist durch den ortsfesten ersten Führungsstift **53** mit dem Rollmechanismus **49** drehbar verbunden, dem wie beschrieben ein zweiter, in der Gleitöffnung **59** der unteren Gleitschiene **60** drehbarer Führungsstift **57** am unteren Rahmenprofil **55** ortsfest zugeordnet ist. Zum Verschieben der Klapp-Teile **63** zwischen oberer und unterer Gleitschiene **43** und **60** hat jedes Klapp-Teil **63** einen weiteren (vorderen) Rollmechanismus **64,** dessen Führungsstift **65** in der Kammer **56** des Rahmenprofils **55** einstellbar gehalten ist.

Diesem einstellbaren Führungsstift **65** im oberen Rahmenprofil **55** ist ein weiterer Führungsstift **66** im unteren Rahmenprofil **55** zugeordnet. Er ist genauso wie der Führungsstift **65** einstellbar, d.h. er kann in der Kammer **56** des unteren Rahmenprofils **55** verschoben und je nach erforderlicher Abstandslänge **L**_{**1-n**} fixiert werden.

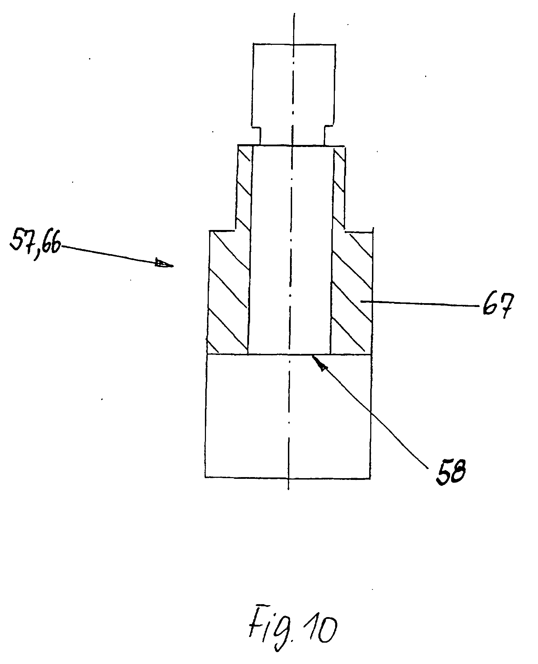

Auf die Enden der Führungsstifte **53, 57, 65** und **66** ist eine drehbare Buchse **67** geschoben, die das Verschieben und Drehen der Stifte in der Kammer **56** leichtgängig macht (siehe Fig.10).
Die separaten Klapp-Teile **63** hängen an ihren Rollmechanismen **49** bzw. **64** und lassen sich entlang der Gleitfläche **48** der oberen Gleitschiene **43** verschieben.

Wenn die langgestreckte Seitenöffnung **41** in der Seitenwand geschlossen ist, sind die Klapp-Teile **63** zwischen oberer und unterer Gleitschiene **43** und **60** zu einer Reihe aufgereiht, stoßen leicht aneinander und reichen bis annähernd in den Heckbereich des Fahrzeuges (siehe Fig. 9). Soll die Seitenöffnung **41** geöffnet werden, wird zunächst das in unmittelbarer Nähe der Heckwand befindliche Klapp-Teil **63** bis zum Anschlag **75** an die Heckwand herangeschoben.

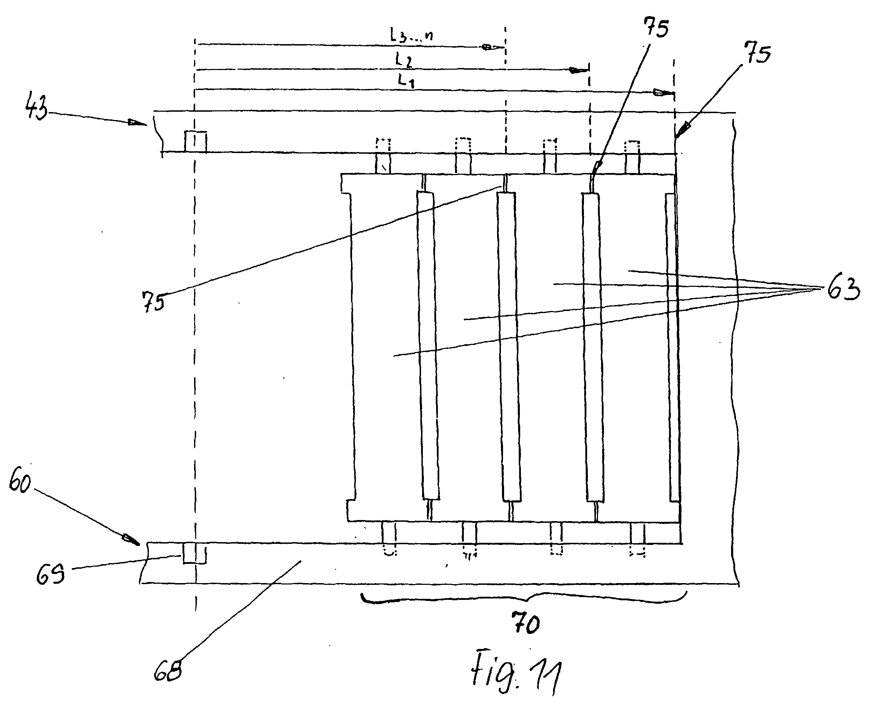

In den Seitenwänden **68** der oberen und unteren Gleitschiene **43** und **60** ist eine Aussparung **69** eingearbeitet, die etwa in ihrer Breitenabmessung der Breite des Rollmechanismus **64** zuzüglich der Verglasungsdicke **V** entspricht.
Die Führungsstifte **65** und **66** werden entsprechend dem Maß vom Anschlag **75** bis zur Aussparung **69** eingestellt. Nach Einstellung auf diesen Abstand ist es möglich, das erste Klapp-Teil **63** um die durch die ortsfesten Führungsstifte **53** und **57** bestimmte Achse **D** mitsamt Rollmechanismus **64** und Führungsstiften in Richtung Heckwand zu einzuklappen. Das nächstfolgende Klapp-Teil **63** in der aufeinandergereihten Reihe von Klapp-Teilen wird bis auf Anschlag **75** an das bereits eingeklappte Klapp-Teil **63** herangeschoben. Wiederum werden die verstellbaren Führungsstifte **65** und **66** auf das erforderliche Abstandsmaß eingestellt und das Klapp-Teil **63** mit seinem vorderen Rollmechanismus **64** und den Führungsstiften auf das bereits eingeklappte Klapp-Teil **63** eingeschwenkt. Dies setzt sich solange fort bis alle Klapp-Teile **63** ein Paket **70** wie in Fig. 11 dargestellt an der Heckwand **85** bilden.

Beim Verschließen werden die einzelnen Klapp-Teile wiederum um die Achse der feststehenden Führungsstifte soweit in die Gleitschienen **43** und **60** eingeschwenkt, dass der vordere Rollmechanismus **64** mit seiner Gleitrolle **50** auf die Gleitfläche **48** zu liegen kommt. Das Klapp-Teil **63** kann dann in den Gleitschienen auf die gewünschte Position verschoben werden.

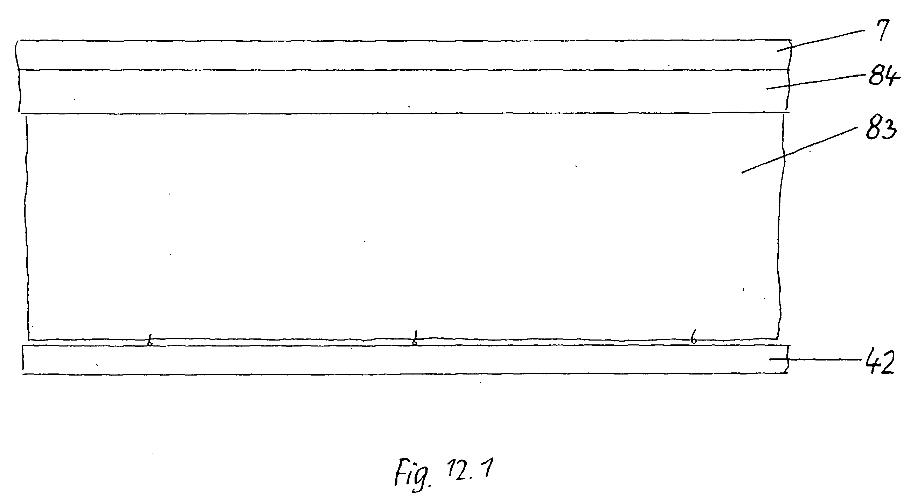

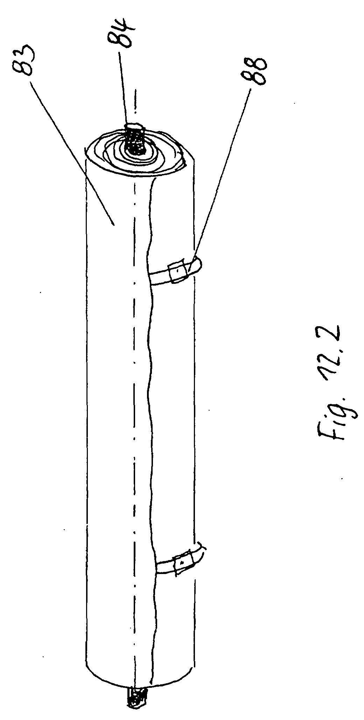

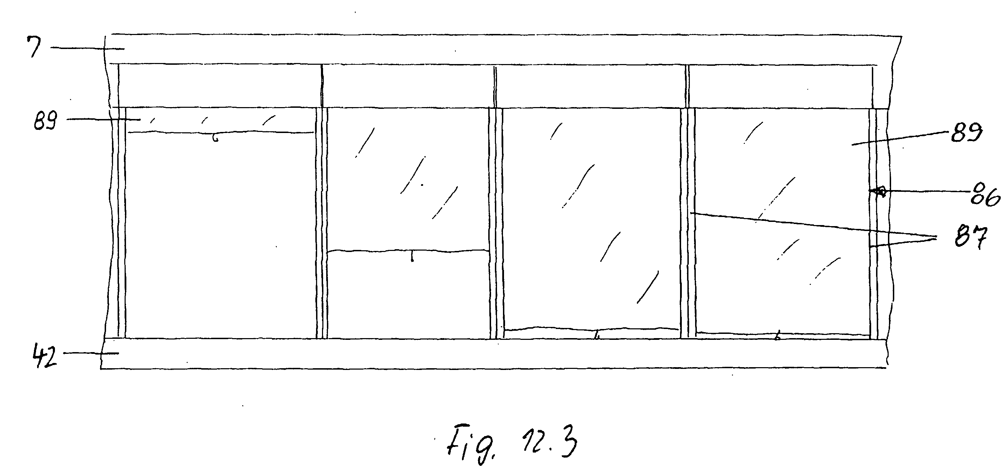

Anstelle der Klapp-Teile **63** kann aber wie in Fig. 12.1 bis 12.3 gezeigt, auch eine Folie **83** verwendet werden, um die Seitenöffnung **41** wahlweise zu öffnen oder zu schließen.
In diesem Fall ist eine Kederleiste **84** an den Laufschienen **7** montiert. Wie in Fig. 12.1 dargestellt, verläuft die Kederleiste **84** nahe der Laufschienen **7.** Auf der Kederleiste **84** ist die Folie **83** aufgewickelt und mit Halterungen **88** gegen Abrollen (siehe Fig. 12.2) gesichert. Soll die Seitenöffnung **41** verschlossen werden, werden die Halterungen **88** gelöst, die Folie **83** über die gesamte Länge der Seitenöffnung **41** von der Kederleiste abgerollt und diese am Anschlußprofil **42** eingehakt.
Eine weitere Möglichkeit die Seitenöffnung **41** verschließ- und öffnungsbar zu gestalten, besteht wie in Fig. 12.3 verdeutlicht darin, Rollos **89** an den Laufschienen **7** zu befestigen. Zwischen den Laufschienen **7** und dem Anschlußprofil **42** verlaufen in Breite des Rollos **89** jeweils zu den Seitenrändern **86** der Rollos **89** hin geöffnete vertikale Führungsschienen **87,** die die Rollos **89** seitlich führen. Die Rollos **89** werden gegen Federkraft in Schließstellung gezogen und am Anschlußprofil **42** befestigt. Zum Öffnen der Seitenöffnung **41** wird das jeweilige Rollo **89** vom Anschlussprofil **42** gelöst, ausgehakt und von der Federkraft aufgerollt.
Es ist aber auch möglich, die Rollos **89** zwischen den Laufschienen **7** und dem Anschlußprofil **42** in vertikaler Einbaulage zu montieren. Die Rollos **89** öffnen und schließen dann nur in waagerechter Richtung.

### Beispiel 2

Der Aufbau des erfindungsgemäßen Omnibusses entspricht weitgehend dem des Beispiels 1 nur mit dem Unterschied, dass der Doppeldecker-Omnibus sein Dach beibehält.

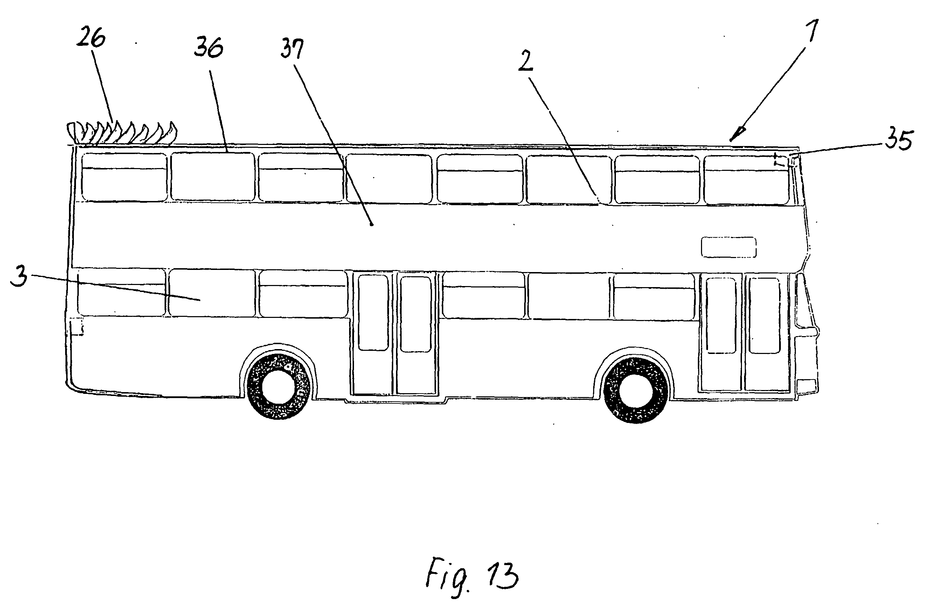

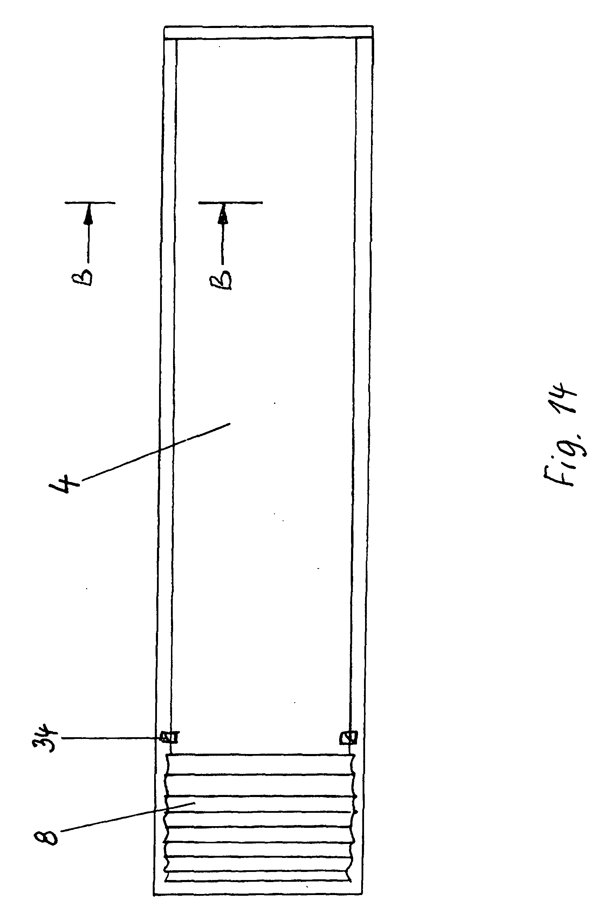

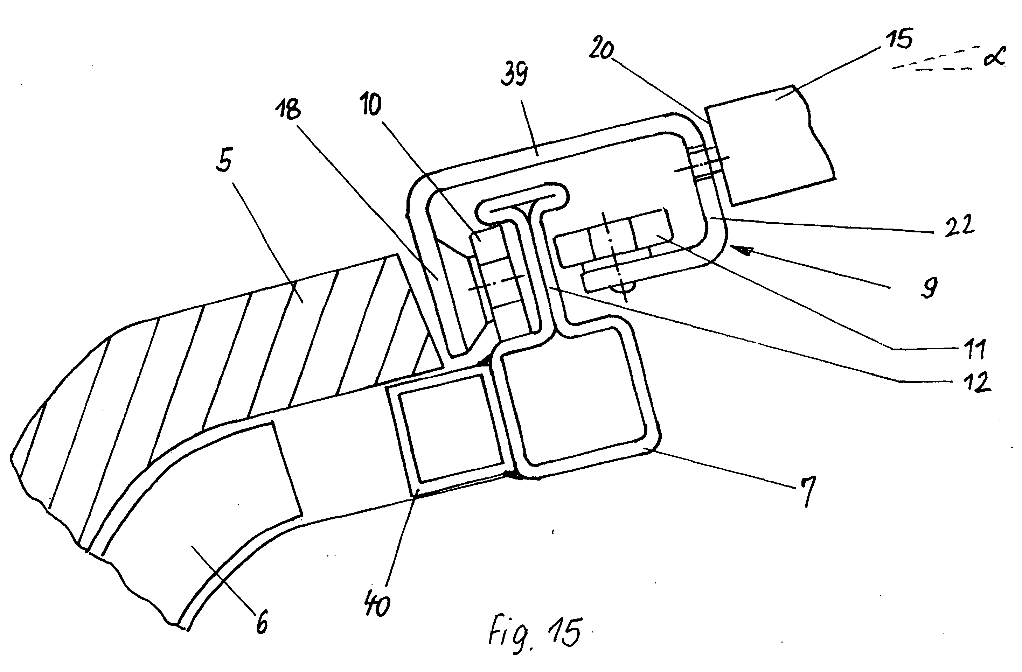

Der Panoramadeckteil **2** besitzt eine sich längs erstreckende Dachöffnung **4** (Fig. 13 und 14), die im waagerechten Teil des Daches angeordnet ist. In Fig. 15 ist gezeigt wie die Blechhaut **5** der Karosserie im Bereich ihrer Krümmung zum Dach hin durch ein Kantenprofil **6** verstärkt ist. Die langgestreckte Dachöffnung **4** ist an ihren Längsseiten von einem Längsspanten **40** begrenzt, an dem die Laufschienen **7** des Schiebeverdecks **26** angesetzt und mit den Seitenwänden des Spantens **40** verbunden sind.
Das Kantenprofil **6** ist abgestützt von den Längsteilen **36** der Seitenwände **37** des Panoramadeckteils **2.**

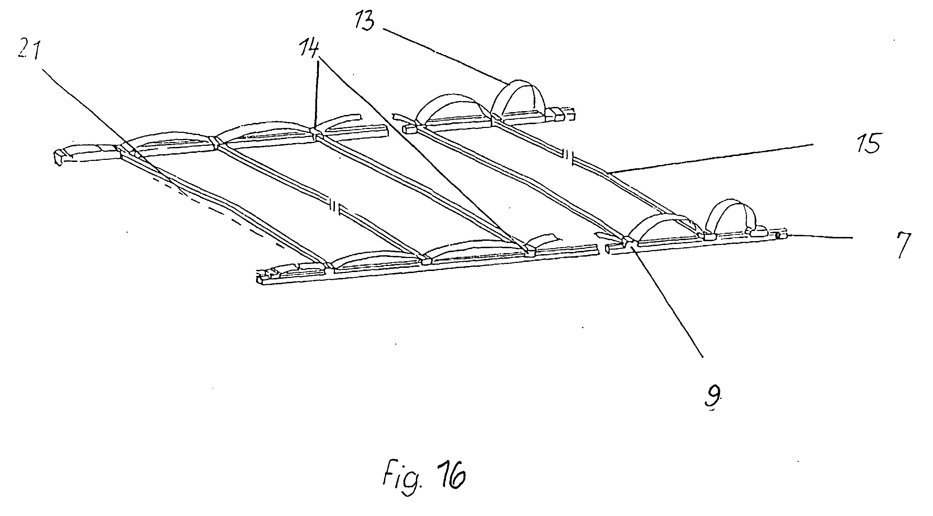

Auf den Laufschienen **7** sind eine Vielzahl von Rollwagen **9** längsverschieblich mittels inneren Führungsrollen **10** und äußeren Führungsrollen **11** am Führungssteg **12** der Laufschienen **7** geführt (siehe Fig. 16).

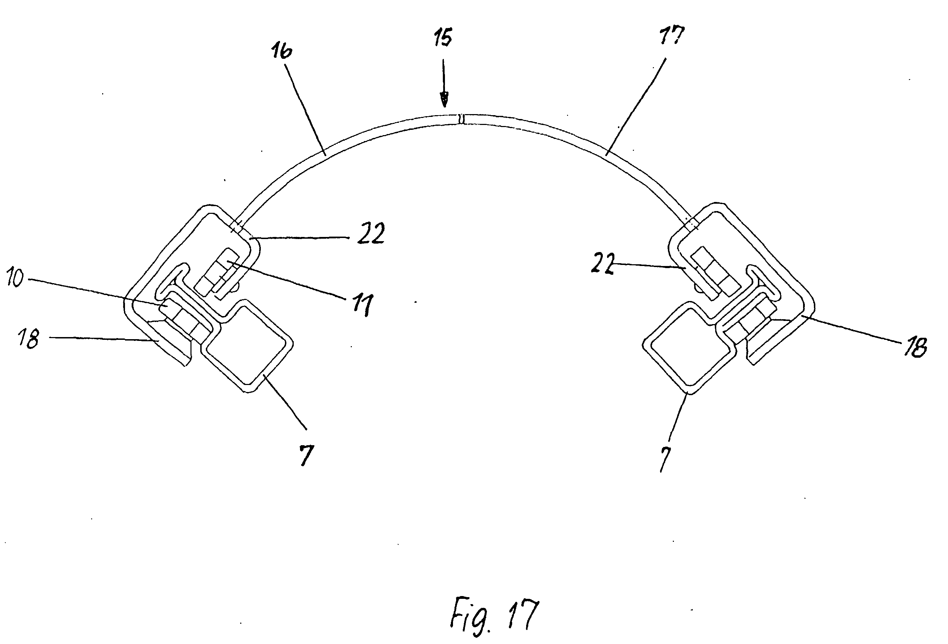

Wie in Fig. 17 dargestellt, verläuft die Rollachse **A** der inneren Führungsrolle **10** parallel zum Führungssteg **12,** die Rollachse **B** der äußeren Führungsrolle **11** dagegen senkrecht dazu, so dass die Rollachsen beider Führungsrollen zueinander senkrecht stehen.
Jeweils zwei auf einer Laufschiene **7** benachbarte Rollwagen **9** sind untereinander durch flexible Gelenkbänder **13** miteinander verbunden. Die Rollwagen **9** eines Rollwagenpaares **14** sind jeweils durch einen Spriegel **15** verbunden, der bogenförmig ausgebildet ist.

Die beiden bogenförmigen Seitenabschnitte **16** und **17** des Spriegels **15** sind jeweils in einer Bohrung **19** der äußeren Rollwagenwand **22** eines Rollwagenpaares **14** drehbar gelagert.
Die Krümmung der Seitenabschnitte **16** und **17** des Spriegels **15** ist so gewählt, dass sie der Neigung der ursprünglichen Dachneigung des Omnibusses von etwa 5° entspricht. Dadurch können die Seitenabschnitte **16** bzw. **17** ohne eine zusätzliche Abbiegung der Spriegelenden **20** von der Bohrung **19** der äußeren Rollwagenwand **22** direkt aufgenommen werden.

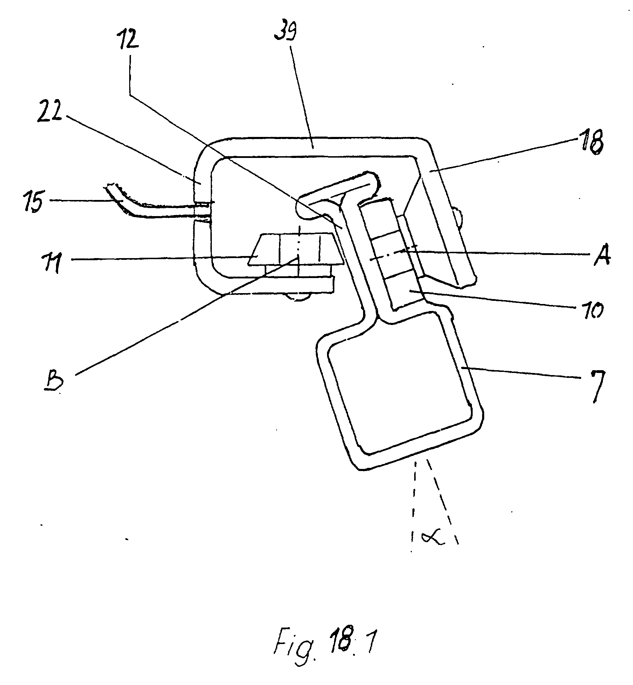

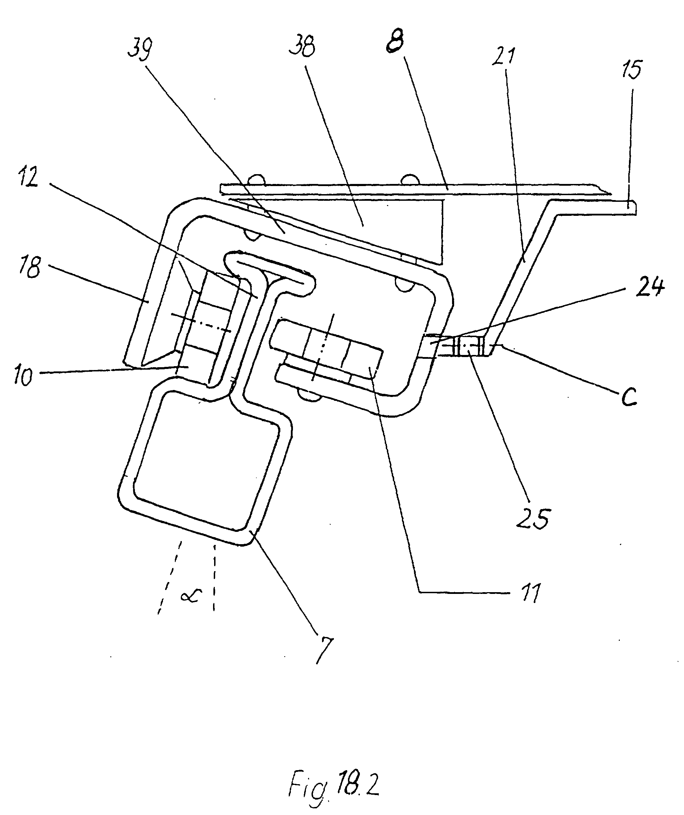

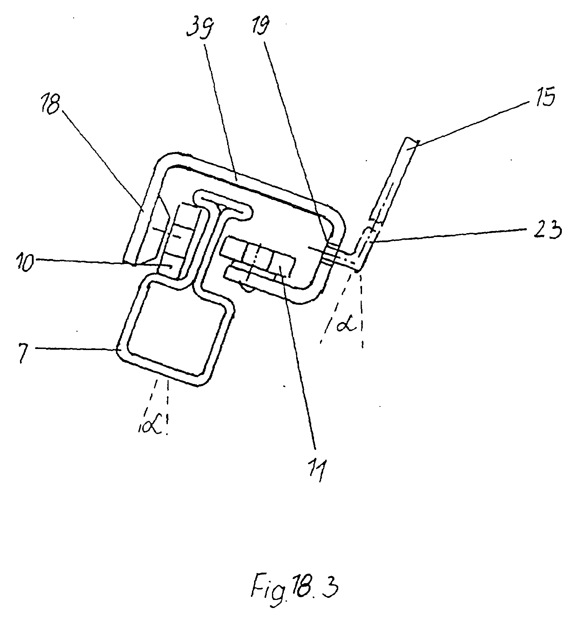

Andere mögliche Verbindungsarten der Spriegel **15** mit den Rollwagen **9** in den schräggelegten Laufschienen **7** erfordern eine weitergehende Anpassung der Führungsrollen, der Spriegel und der Rollwagen an die Schräglage. Sie sind in Fig. 18.1 bis 18.3 verdeutlicht.
Um eine waagerechte Lagerung der Spriegelenden **20** in der Bohrung **19** der äußeren Rollwagenwand **22** zu erreichen, können aber auch die Seitenabschnitte **16** bzw. **17** eine Abbiegung **21** aufweisen, die der Schräglage von Laufschienen **7** und Rollwagen **9** entspricht.

Ebenso ist es möglich, die äußere Führungsrolle **11** als Kegel mit einem der Dachneigung entsprechenden Öffnungswinkel auszubilden und die innere Rollwagenwand **18** mit der inneren Führungsrolle **10** in Dachneigung abzubiegen.

Eine andere Möglichkeit stellt die Lagerung der Spriegelenden **20** an schräg an der äußeren Rollwagenwand **22** fixierten Tragarmen **23** dar, zwischen denen die Seitenwandabschnitte **16** bzw. **17** der Spriegel **15** drehbar gelagert sind.

Eine weitere Variante der Lagerung der Spriegelenden **20** ist diejenige, die Spriegelenden **20** als separate, jeweils eine der Dachneigung entsprechenden Abschrägung aufweisende, mit ihrer Achse **C** in einer Schrägbohrung **24** der äußeren Rollwagenwand **22** gelagerte Endteile **25** auszubilden, zwischen denen der Spriegel **15** seinerseits drehbar ist. Für diese Ausführungsform der Erfindung ist auf der oberen Rollwagenwand **39** ein keilförmiges Zwischenstück **38** angeordnet, das sicherstellt, dass die Verdeckplane **8** eine weitgehende horizontale Lage einnehmen kann.

An den Spriegeln **15** ist die Verdeckplane **8** lösbar befestigt, so dass durch ein Verfahren der Rollwagen **5** auf den Laufschienen **7** die Verdeckplane **8** die Dachöffnung im Dach des Panoramadeckteils **2** vollkommen oder teilweise abschließen kann (Fig. 13 und 14).

### Aufstellung der verwendeten Bezugszeichen

- Doppeldecker-Omnibus: 1
- Panoramadeckteil: 2
- Unterdeckteil: 3
- Dachöffnung: 4
- Blechhaut der Karosserie: 5
- Kantenprofil: 6
- Laufschienen: 7
- Verdeckplane: 8
- Rollwagen: 9
- innere Führungsrolle: 10
- äußere Führungsrolle: 11
- Führungssteg: 12
- Gelenkbänder: 13
- Rollwagenpaar: 14
- Spriegel: 15
- Seitenabschnitte der Spriegel: 16, 17
- innere Rollenwand: 18
- Bohrungen der äußeren Rollwagenwand: 19
- Spriegelenden: 20
- Abbiegung: 21
- äußere Rollwagenwand: 22
- Tragarm: 23
- Schrägbohrung: 24
- Endteile: 25
- Schiebeverdeck: 26
- Stiftver- und -entriegelung: 27
- Bohrung: 28
- Tragarm: 29
- Bolzen: 30
- Aussparung: 31
- Ver- und Entriegelungsglied: 32
- Bohrung: 33
- Feststeller: 34
- Zugeinrichtung: 35
- Längsteile der Seitenwand: 36
- Seitenwand: 37
- Zwischenstück: 38
- obere Rollwagenwand: 39
- Längsspanten: 40
- Seitenöffnung: 41
- Anschlußprofil: 42
- obere Gleitschiene: 43
- Kastenprofil der oberen Gleitschiene: 44a
- Kastenprofil der unteren Gleitschiene: 44b
- vorderer Wandbereich des Profils 44a: 45
- hintere Wand des Profils 44a: 46
- Führungswand im Profil 44a: 47
- Gleitfläche im Profil 44a: 48
- Rollmechanismus: 49
- Gleitrolle von 49 und 60: 50
- Führungsnut: 51
- Aufnahme für Führungsstift: 52
- erster ortsfester drehbarer Führungsstift: 53
- Gleitöffnung in der oberen Gleitschiene: 54
- Rahmenprofil für Verglasung: 55
- Kammer für Führungsstift im Rahmenprofil: 56
- zweiter ortsfester drehbarer Führungsstift: 57
- freies Ende des Führungsstiftes 57: 58
- Gleitöffnung in der unteren Gleitschiene: 59
- untere Gleitschiene: 60
- Rückwand der unteren Gleitschiene: 61
- Kammer für Verglasung im Rahmenprofil: 62
- Klapp-Teil: 63
- vorderer Rollmechanismus: 64
- verschiebbarer Führungsstift: 65
- verschiebbarer Führungsstift: 66
- drehbare Buchse: 67
- Seitenwände in den Gleitschienen (Profil): 68
- Aussparung: 69
- Paket: 70
- Sichtelemente: 71
- Vertikalstreben: 72
- Halterahmen: 73
- äußere Wand an Laufschiene: 74
- Anschlag: 75
- Befestigungsnut in 43: 76
- fadenförmige Dichtung: 77
- Befestigungsnut in 55: 78
- Dichtung: 79
- Winkelprofil: 80
- Wandseite: 81
- innere Beplankung: 82
- Folie: 83
- Kederleiste: 84
- Heckwand: 85
- Seitenränder der Rollos: 86
- vertikale Seitenränder: 87
- Halterung: 88
- Rollos: 89
- Oberkante: 90
- Beplankung: 91
- waagerechte Wand des Anschlußprofils 42: 92
- waagerechter Schenkel von 80: 93
- senkrechter Schenkel von 80: 94
- Dachneigung: α
- Rollachsen der Führungsrollen: A,B
- Achse des Endteiles: C
- Achse der ortsfesten Führungsstifte: D
- Abstandslänge: L₁₋ₙ
- Verglasungsdicke: V

## Patentansprüche

1. Doppeldecker-Omnibus für Stadtrundfahrten, mit einem Fahrerhaus, das in die selbsttragende Karosserie mit Seitenwände **(37)** und Heckwand **(85)** integriert ist, einem das Deck ganz oder teilweise überdeckenden Panoramadeckteil **(2),** dessen Dachaufbau sich an einem aus Horizontal- und Vertikalstreben **(72)** bestehenden Halterahmen **(73)** oder den Seitenwänden **(37)** abstützt, **dadurch gekennzeichnet, dass** das Dach des Panoramadeckteils aus einem an sich bekannten Schiebeverdeck **(26)** gebildet ist, dessen Laufschienen **(7)** und Rollwagen **(9)** insgesamt in einer zueinander nach innen gekippten Schräglage angeordnet sind, die der Dachneigung **(α)** entspricht, und dass die Laufschienen **(7)** einen Führungssteg **(12)** aufweisen, an denen sich innere und äußere Führungsrollen **(10;11)** in der Schräglage abstützen, wobei ihre Rollenachsen **(A;B)** zueinander senkrecht stehen.

2. Doppeldecker-Omnibus nach Anspruch 1, **dadurch gekennzeichnet, dass** sich die Laufschienen **(7)** über die gesamte Länge des Halterahmens **(73)** bzw. der Dachöffnung **(4)** erstrecken.

3. Doppeldecker-Omnibus nach Anspruch 1 und 2,
**dadurch gekennzeichnet, dass** die Schließrichtung des Schiebeverdecks **(26)** entgegen oder in Fahrtrichtung verläuft.

4. Doppeldecker-Omnibus nach Anspruch 1, **dadurch gekennzeichnet, dass** die Gelenkbänder **(13)** tragende Rollwagen **(9)** auf den Laufschienen **(7)** kugellagergelagert sind.

5. Doppeldecker-Omnibus nach Anspruch 1, **dadurch gekennzeichnet, dass** die Seitenabschnitte **(16;17)** der Spriegel **(15)** direkt an der Rollenaußenwand **(22)** drehbar angelenkt sind.

6. Doppeldecker-Omnibus nach Anspruch 1, **dadurch gekennzeichnet, dass** die Seitenabschnitte **(16;17)** der Spriegel **(15)** Abbiegungen **(21)** aufweisen, die der Schräglage entsprechen.

7. Doppeldecker-Omnibus nach Anspruch 1, **dadurch gekennzeichnet, dass** die innere Führungsrolle **(10)** als eine Kegelrolle mit einem der Dachneigung **(α)** entsprechenden Öffnungswinkel ausgebildet und die äußere Führungsrolle **(11)** unter einem der Dachneigung **(α)** entsprechenden Winkel am Rollwagen **(9)** angelenkt ist, wobei die Seitenabschnitte **(16;17)** der Spriegel **(15)** horizontal an der Rollwageninnenwand **(18)** drehbar angeordnet ist.

8. Doppeldecker-Omnibus nach Anspruch 1, **dadurch gekennzeichnet, dass** die Spriegelenden **(20)** als separate, jeweils eine der Dachneigung **(α)** entsprechende Abschrägungen aufweisende, mit ihrer Achse **(C)** in einer Schrägbohrung **(24)** der äußeren Rollwagenwand **(22)** gelagerte Endteile **(25)** ausgebildet sind, zwischen denen der Spriegel **(15)** seinerseits drehbar gelagert ist, und dass die Verdeckplane **(8)** durch ein keilförmiges Zwischenstück **(38)** an der oberen Rollwagenwand **(39)** in horizontaler Lage gehalten ist.

9. Omnibus nach Anspruch 2 und 3, **dadurch gekennzeichnet, dass** jeweils an der äußeren Rollwagenwand **(22)** eines Rollwagenpaares **(14)** ein Tragarm **(23)** unter einem Winkel angelenkt ist, der der Dachneigung (α) entspricht, wobei zwischen den sich gegenüberliegenden Tragarmen **(23)** ein Spriegel **(15)** drehbar gelagert ist.

10. Omnibus nach Anspruch 1, **dadurch gekennzeichnet, dass** die Dachneigung **(α)** 4 bis 6° beträgt.

11. Omnibus nach Anspruch 1, **dadurch gekennzeichnet, dass** die Seitenabschnitte **(16;17)** der Spriegel **(15)** eine Abbiegung **(21)** von α = 4 bis 6° aufweisen.

12. Omnibus nach Anspruch 1, **dadurch gekennzeichnet, dass** die Spriegel **(15)** bogenförmig ausgebildet sind.

13. Omnibus nach Anspruch 1, **dadurch gekennzeichnet, dass** eine federbelastete Stiftver- und -entriegelung **(27)** der Spriegel **(15)** in eine Bohrung **(33)** im Führungssteg **(12)** der vorderen und hinteren Enden der Laufschienen **(7)** sichern eingreift und entgegen Federkraft wieder lösbar ist.

14. Doppeldecker-Omnibus nach Anspruch 1, **dadurch gekennzeichnet, dass** die Verdeckplane **(8)** aus reißfestem Kunststoffmaterial besteht.

15. Doppeldecker-Omnibus nach Anspruch 1, **dadurch gekennzeichnet, dass** die Laufschienen **(7)** steckbar ausgebildet sind.

16. Doppeldecker-Omnibus nach Anspruch 1, **dadurch gekennzeichnet, dass** die Vertikalstreben **(72)** steckbar ausgebildet sind.

17. Doppeldecker-Omnibus nach Anspruch 1, **dadurch gekennzeichnet, dass** für die Fixierung der Verdeckplane **(8)** Feststeller **(34)** an der Laufschiene **(7)** lösbar angeordnet sind.

18. Doppeldecker-Omnibus nach Anspruch 1, **dadurch gekennzeichnet, dass** mit einer Zugeinrichtung **(35)** Gelenkbänder **(13),** Rollwagen **(9),** Spriegel **(15)** und Verdeckplane **(8)** betätigbar sind.

19. Doppeldecker-Omnibus nach Anspruch 18, **dadurch gekennzeichnet, dass** die Zugeinrichtung **(35)** handbetätigt und/oder motorgetrieben ist.

20. Doppeldecker-Omnibus nach Anspruch 1, **dadurch gekennzeichnet, dass** als verschließ- und öffnungsbares Sichtelement **(71)** für die Seitenöffnung **(41)** eine in einem mehrkammerigen Rahmenprofil **(55)** geklemmte Verglasung vorgesehen ist.

21. Doppeldecker-Omnibus nach Anspruch 1 und 20, **dadurch gekennzeichnet, dass** die Verglasung aus separat voneinander getrennten, in Gleitschienen **(43;60)** aneinandergereihten oder zu einem Paket **(70)** gegen einen Anschlag **(75)** zusammenlegbaren Klapp-Teilen **(63)** besteht.

22. Doppeldecker-Omnibus nach Anspruch 21, **dadurch gekennzeichnet, dass** die Verglasung aus Sicherheitsglas oder Kunststoffglas, vorzugsweise Polycarbonatglas, besteht.

23. Doppeldecker-Omnibus nach Anspruch 1, 20 bis 22, **dadurch gekennzeichnet, dass** die Gleitschienen **(43;60)** mit ihren Gleitöffnungen **(54;59)** zueinander ausgerichtet, vertikal übereinanderliegend in der Seitenöffnung **(41)** angeordnet sind, zwischen denen die Klapp-Teile **(63)** horizontal verschiebbar und jeweils in ihrer Anschlaglage einerends drehbar und anderenends in das Innere des Decks einschwenkbar angeordnet sind.

24. Doppeldecker-Omnibus nach Anspruch 1, 20 bis 23, **dadurch gekennzeichnet, dass** die an den Laufschienen **(7)** befestigte obere Gleitschiene **(60)** aus einem einseitig zum Inneren der Seitenöffnung **(41)** hin geöffneten Kastenprofil **(44)** gebildet ist, dessen der Laufschiene **(7)** zugewandte geschlossene Kastenwand **(46)** mit einer senkrecht in das Innere des Profils **(44a)** hineinragenden Führungswand **(47)** versehen ist, der eine senkrecht zu dieser Führungswand **(47)** angeordnete, innere Gleitfläche **(48)** zugeordnet ist, die sich horizontal verlaufend auf der der Laufschiene **(7)** abgewandten, mit der Gleitöffnung **(54)** versehenen Kastenwand **(45)** befindet, und dass die am Anschlußprofil **(42)** befestigte untere Gleitschiene **(60)** aus einem ebenfalls einseitig in das Innere der Seitenöffnung **(41)** hin geöffneten, die Gleitöffnung **(59)** aufweisenden Kastenprofil **(44b)** besteht.

25. Doppeldecker-Omnibus nach Anspruch 1, 20 bis 24, **dadurch gekennzeichnet, dass** für jedes Klapp-Teil **(63)** zwei im Inneren von der Führungswand **(47)** geführte und auf der Gleitfläche **(48)** bewegbare, voneinander beabstandete Rollmechanismen **(49;64)** vorgesehen sind, von denen der hintere dem Anschlag **(75)** zugewandte Rollmechanismus **(49)** mit einem am Rahmenprofil **(55)** des oberen Teils des Klapp-Teiles **(63)** ortsfest befestigten Führungsstift **(53)** drehbar verbunden ist, dem ein mit seiner Achse **(D)** fluchtender, am unteren Rahmenprofil des Klapp-Teils ortsfest befestligter zweiter, in die Gleitöffnung **(59)** der unteren Gleitschiene **(60)** eintauchender Führungsstift **(57)** zugeordnet ist, und dass der vordere dem Anschlag **(75)** abgewandte Rollmechanismus **(64)** mit einem, im oberen Rahmenprofil **(55)** auf unterschiedliche Abstandslänge **(L**_{**1-n**} **)** einstellbaren, arretier- und lösbaren Führungsstift **(65)** versehen ist, dem ein weiterer im unteren Rahmenprofil **(55)** gleichermaßen auf unterschiedliche Abstandslänge einstell-, arretier- und lösbarer Führungsstift **(66)** zugeordnet ist.

26. Doppeldecker-Omnibus nach Anspruch 1, 20 bis 25, **dadurch gekennzeichnet, dass** die Gleitschienen **(43;60)** jeweils eine vom Anschlag **(75)** beabstandete Aussparung **(69)** in ihrer zum Inneren des Decks gelegenen seitlichen Begrenzungswand **(68)** aufweisen, die in ihrer Abmessung der Abmessung des Rollmechanismus **(64)** zuzüglich der Verglasungsdicke **(V)** entspricht.

27. Doppeldecker-Omnibus nach Anspruch 1, 20 bis 26, **dadurch gekennzeichnet, dass** zumindest die einstellbaren Führungsstifte **(65;66)** mit einer Buchse **(67)** versehen sind.

28. Doppeldecker-Omnibus nach Anspruch 1, 20 bis 27, **dadurch gekennzeichnet, dass** die obere Gleitschiene **(43)** auf ihrer der Laufschiene **(7)** abgewandten geöffneten Kastenwand **(45)** eine Befestigungsnut **(76)** aufweist, in der eine das Rahmenprofil **(55)** abschirmende Dichtung **(77)** befestigt ist.

29. Doppeldecker-Omnibus nach Anspruch 1, 20 bis 28, **dadurch gekennzeichnet, dass** das untere Rahmenprofil **(55)** eine Befestigungsnut **(78)** aufweist, in der eine die untere Gleitschiene **(60)** abschirmende Dichtung **(79)** angeordnet ist.

30. Doppeldecker-Omnibus nach Anspruch 1, **dadurch gekennzeichnet, dass** die untere Gleitschiene **(60)** auf dem waagerechten Wandteil **(92)** des Anschlußprofils **(42)** und dem Schenkel **(93)** eines den waagerechten Wandteil gleichsam verlängernden Winkelprofils **(80)** aufgesetzt verbunden ist, wobei der andere Schenkel **(94)** des Winkelprofils **(80)** an der zur inneren Beplankung **82** gerichteten Wandseite **81** des Anschlußprofils **(42)** befestigt ist, und dass die obere Gleitschiene **(43)** direkt an der dem Führungssteg **12** abgekehrten waagerecht verlaufenden Wandteil **74** der Laufschiene **(7)** befestigt ist.

31. Doppeldecker-Omnibus nach Anspruch 1, **dadurch gekennzeichnet, dass** als Sichtelement **(71)** eine ganz oder teilweise über die Länge der Seitenöffnung **(41)** sich erstreckende Folie **(83)** vorgesehen ist, die um eine an der Laufschiene **(7)** befestigte Kederleiste **(84)** auf- und abwickelbar befestigt ist.

32. Doppeldecker-Omnibus nach Anspruch 1 und 31, **dadurch gekennzeichnet, dass** die abgewickelte Folie **(83)** am Anschlußprofil **(42)** einhakbar ausgebildet ist.

33. Doppeldecker-Omnibus nach Anspruch 1, **dadurch gekennzeichnet, dass** als Sichtelement **(71)** mehrere in der Seitenöffnung **(41)** nebeneinander horizontal angeordnete, Rollos **(89)** vorgesehen sind, deren vertikale Seitenränder **(86)** in vertikal zwischen Laufschiene **(7)** und Anschlußprofil **(42)** angeordneten Führungsschienen **(87)** geführt sind.

34. Doppeldecker-Omnibus nach Anspruch **1, dadurch gekennzeichnet, dass** als Sichtelement **(71)** mehrere in der Seitenöffnung **(41)** nebeneinander vertikal angeordnete Rollos **(89)** vorgesehen sind, deren horizontale Ränder durch Klettverschluss verbunden sind.

35. Doppeldecker-Omnibus nach Anspruch 1 bis 34, **dadurch gekennzeichnet, dass** der überdachte Teil der Fahrgastzelle auf wenigstens 25 bis max. 75% ihrer Länge erstreckt, wobei der dachlose Teil seitlich offen ausgebildet ist.

## Claims

1. Double decker bus for sightseeing tours, with a driver's cab integrated into the chassisless construction with side panels (37) and trailing panel (85), a panoramic topside part covered completely or partially the deck whereat the roof construction of the panoramic topside part is supported by a holding frame (73) made from horizontally and vertically supports (72) **characterised in that** the roof of the panoramic topside part is in principle known formed from a sliding canopy (26), the sliding bars (7) and rolling bodies (9) of the sliding canopy are arranged altogether to each other in direction of the inner side in a tilted inclination which is in agreement with the slope of the roof (α), and the sliding bars (7) show a guiding web (12) on which inner and outer guiding rolls (10;11) are supported in the tilted inclination, whereat her roll axis (A;B) are vertically arranged to each other.

2. Double decker bus according to claim 1, **characterised in that** the sliding bars (7) extend over the complete length of the holding frame (73) or the roof opening (4).

3. Double decker bus according to claim 1 and 2, **characterised in that** the closing direction of the sliding canopy (26) is contrary or in direction of travel.

4. Double decker bus according to claim 1, **characterised in that** the rolling bodies (9) equipped with hinge bands (13) are supported by ball bearing on the sliding bars (7).

5. Double decker bus according to claim 1, **characterised in that** the side sections (16;17) of the tarpaulin frame (15) are rotatably hinged directly at the outside wall (22) of the rolls.

6. Double decker bus according to claim 1, **characterised in that** the side section (16;17) of the tarpaulin frame (15) show bends (21) corresponding to the tilted inclination.

7. Double decker bus according to claim 1, **characterised in that** the inner guiding roll (10) is formed like a tapered roll with an opening angle corresponding to the slope of the roof (α) and the outer guiding roll (11) is hinged at the rolling body (9) in an angle corresponding to the slope of roof (α), whereat the side sections (16;17) of the tarpaulin frame (15) is rotatably arranged horizontally at the inner wall (39) of the rolling body.

8. Double decker bus according to claim 1, **characterised in that** the ends (20) of the tarpaulin frame are formed like ending parts (25) showing bevels which are correspond to the slope (α) of the roof and pivoted with her axis ( C ) separately in a inclined bore (24) of the outer wall (22) of rolling body between which is rotatably supported the tarpaulin frame (15) on his parts, and the top cover (8) is holded by a wedge-shaped connecting piece (38) in a horizontally position at the upper wall (39) of the rolling body.

9. Double decker bus according to claim 2 and 3, **characterised in that** a supporting arm (23) is hinged in an angle corresponding to the slope (α) of the roof at the outer wall (22) of the rolling body from a rolling body pair (14), whereat a tarpaulin frame (15) is rotatably supported between the opposite supporting arms (23).

10. Double decker bus according to claim 1, **characterised in that** the slope (α) of the roof is 4 to 6°.

11. Double decker bus according to claim 1, **characterised in that** the side sections (16;17) of the tarpaulin frame (15) show a bend (21) of α = 4 to 6ₒ.

12. Double decker bus according to claim 1, **characterised in that** the tarpaulin frame (15) are formed curved.

13. Double decker bus according to claim 1, **characterised in that** a springloaded pin releasing and interlocking mechanism (27) of the tarpaulin frame (15) is securely engaged and disconnectable against spring force in a bore (33) located in the guiding web (12) of the front and back parts of the sliding bars (7).

14. Double decker bus according to claim 1, **characterised in that** the top cover (8) is made from synthetic material with tearing strength.

15. Double decker bus according to claim 1, **characterised in that** the sliding bars (9) are pluggable.

16. Double decker bus according to claim 1, **characterized in that** the vertically supports (72) are pluggable.

17. Double decker bus according to claim 1, **characterised in that** fastener (34) for fixation of the top cover (8 ) are disconnectable arranged at the sliding bar (7).

18. Double decker bus according to claim 1, **characterised in that** hinge bands (13), rolling bodies (9), tarpaulin frame (15) and top cover (8) are actuated by a drive device (35)

19. Double decker bus according to claim 18, **characterised in that** the drive device (35) is manual-operated and/or engine-powered.

20. Double decker bus according to claim 1, **characterised in that** a glazing clamped in a multicavity frame profile (55) is provided as a closeable and openable view element (71) for the side opening (41).

21. Double decker bus according to claim 1 and 20, **characterised in that** the glazing is made from separated folding parts (63) lined up in a row of guiding bars (43;60) or to a collapsible packet (70) against a stop (75).

22. Double decker bus according to claim 21, **characterised in that** the glazing consist of safety glass or synthetic glass, preferably polycarbonate glass.

23. Double decker bus according to claim 1, 20 to 22, **characterised in that** the guiding bars (43;60) are aligned with her sliding openings (54;59) to each other and vertically superposed in the side opening (41) between which the folding parts (63) are arranged horizontally movable and in her stop position respectively rotatably at the one end and swivelling in direction of the inside of the deck at the other end .

24. Double decker bus according to claim 1, 20 to 23, **characterised in that** the upper guiding bar (60) fixed at the guiding bar (7) is formed by a box section (44) opened unilateral to the inside of the side opening (41), said box section (4) has a closed box wall (46) orientated to the guiding bar (7) with a guiding wall (47) vertically extended into the inside of the profile (44a), a inner gliding surface (48) arranged vertically to the guiding wall (47) is associated to said guiding wall (47), said gliding surface (48) is placed horizontally on the box wall (45) which is turned away to the guiding bars (7) and provided with the slide opening (54), and the lower guiding bar (60) fixed at the connecting profile (42) is formed from a box profile (44b) which is opened unilateral to the inside of the side opening (41) and provided with the slide opening (59).

25. Double decker bus according to claim 1, 20 to 24, **characterised in that** two rolling mechanism (49;64) guided in the inside of the guiding wall (47) and movable from each other on the slide surface (48) are provided for every folding part (63), from which the back rolling mechanism (49) orientated to the stop (75) is rotatable connected to a guiding pin (53) fixed at the frame profile (55) of the upper part of the folding part (63), a second guiding pin (57) fixed at the lower frame profile of the folding part and inserted to the slide opening (59 of the lower guiding bar (60) is associated to said guiding pin (53) and aligned to his axis (D), and the front rolling mechanism (64) opposite orientated to the stop (75) is provided with an arrestable and disconnectable guiding pin (65) which is adjusted to different distance (L₁₋ₙ) in the upper frame profile (55), a further arrestable and disconnectable guiding pin (66) which is adjusted in like manner to different distance in the lower frame profile (55) is associated to said guiding pin (65).

26. Double decker bus according to claim 1, 20 to 25, **characterised in that** the guiding bars (43;60) show respectively a recess (69) spaced from the stop (75) and positioned to the inside of the deck in her lateral boundary wall (68) which in her dimension corresponds to the dimension of the rolling mechanism (64) plus glazing thick (V)

27. Double decker bus according to claim 1, 20 to 26, **characterised in that** at the adjustable guiding pins (65;66) are provided at least with a sleeve (67).

28. Double decker bus according to claim 1, 20 to 28, **characterized in that** the upper guiding bar (43) show a fastening groove (76) on her opened box wall (45) opposite orientated to the guiding bar (7), in which is fixed a sealing (77) shielded the frame profile (55).

29. Double decker bus according to claim 1, 20 to 28, **characterized in that** the lower frame profile (55) shows a fastening groove (76), in which is arranged a sealing (79) shielded the lower guiding bar (60).

30. Double decker bus according to claim 1, **characterized in that** the lower guiding bar (60) is seated on the horizontally wall part (92) of the connecting profile (42) and the arm (93) of an angle section (80) which virtually extends the horizontally wall part, whereat the other arm (94) of the angle section (80) is fixed at the wall side (81) of connecting profile (42) orientated to the inner skin (82), and the upper guiding bar (43) is fixed directly at the horizontally wall part (74) of the guiding bar (7) opposite arranged to the guiding web (12).

31. Double decker bus according to claim 1, **characterized in that** a plastic sheet (83) is provided as view element (71) which wholly or partially extends over the length of the side opening (41) and is reeled and unwounded around an axis (4) fixed at the guiding bar (7).

32. Double decker bus s according to claim 1 and 31, **characterized in that** the unwounded sheet (83) is jumped on the connecting profile (42).

33. Double decker bus according to claim 1, **characterized in that** several sun-blinds (89) are provided as view elements (71) arranged horizontally side by side in the side opening (41), said sun-blinds have vertically fore-edges (86) which are guided in guiding bars (87) between guiding bar (7) and connecting profile (42).

34. Double decker bus according to claim 1, **characterized in that** several sun-blinds (89) are provided as view elements (71) arranged vertically side by side in the side opening (41), said sun-binds have edges which are connected together horizontally by a bur fastening.

35. Double decker bus according to claim 1 to 34, **characterized in that** the roofed part of the passenger cell extends on at least 25 to max. 75% of the length of the cell, whereat the roofless part is formed at the side openly.

## Revendications

1. Autobus à impériale pour des excursions guidées en ville, avec une cabine de conducteur qui est intégrée dans la caisse monocoque avec parois latérales **(37)** et paroi arrière **(85),** l'impériale étant recouverte entièrement ou partiellement par une partie panoramique d'impériale **(2)** dont la structure de toit s'appuie sur un cadre porteur **(73)** comportant des étais horizontaux et verticaux **(72)** ou sur les parois latérales **(37), caractérisé en ce que** le toit de la partie panoramique d'impériale est formé par une capote plissée **(26)** connue au fond dont les glissières **(7)** et les chariots roulants **(9)** sont disposés entièrement en une position oblique basculée vers l'intérieur mutuellement, laquelle correspond à l'inclinaison du toit **(α)**, et que les glissières **(7)** présentent une traverse de guidage **(12)** sur lequel s'appuient des galets de guidage intérieurs et extérieurs **(10; 11)** dans la position oblique, leurs axes de galet **(A ; B)** étant en disposition verticale mutuelle.

2. Autobus à impériale suivant la revendication 1, **caractérisé en ce que** les glissières **(7)** s'étendent sur toute la longueur respectivement du cadre porteur **(73)** et de l'ouverture du toit **(4).**

3. Autobus à impériale suivant les revendications 1 et 2, **caractérisé en ce que** le sens de fermeture de la capote plissée **(26)** suit la marche arrière ou la direction de marche.

4. Autobus à impériale suivant la revendication 1, **caractérisé en ce que** les chariots roulants **(9)** portant des bandes articulées **(13)** sont logés par des roulements à billes sur les glissières **(7).**

5. Autobus à impériale suivant la revendication 1, **caractérisé en ce que** les parties latérales **(16 ;17)** des voussures **(15)** sont articulées de manière orientable directement sur la paroi extérieure des galets **(22)**.

6. Autobus à impériale suivant la revendication 1, **caractérisé en ce que** les parties latérales **(16 ;17)** des voussures **(15)** présentent des cintres **(21)** correspondant à la position oblique.

7. Autobus à impériale suivant la revendication 1, **caractérisé en ce que** le galet de guidage intérieur **(10)** est formé comme un galet conique avec un angle d'ouverture correspondant à l'inclinaison du toit **(α)** et que le galet de guidage extérieur **(11)** est articulé sur le chariot roulant **(9)** sous un angle correspondant à l'inclinaison du toit **(α),** les parties latérales **(16;17)** des voussures **(15)** étant disposées horizontalement de manière orientable sur la paroi intérieure **(18)** du chariot roulant.

8. Autobus à impériale suivant la revendication 1, **caractérisé en ce que** les bouts des voussures **(20)** sont formés comme parties terminales **(25)** séparées, présentant chaque fois un chanfrein correspondant à l'inclinaison du toit **(α)**, logées avec leur axe **(C)** dans un alésage oblique **(24)** de la paroi extérieure **(22)** du chariot roulant, entre lesquelles est logée la voussure **(15)** pour sa part de manière orientable, et que la bâche **(8)** de la capote est maintenue en position horizontale par une pièce intermédiaire **(38)** de la paroi supérieure **(39)** du chariot roulant.

9. Autobus à impériale suivant les revendications 2 et 3, **caractérisé en ce que**, chaque fois sur la paroi extérieure **(22)** du chariot roulant d'une paire de chariots roulants **(14),** il est articulé un bras porteur **(23)** sous un angle correspondant à l'inclinaison du toit **(α)**, une voussure **(15)** étant logée de manière orientable entre les bras porteurs **(23).**opposés.

10. Autobus à impériale suivant la revendication 1, **caractérisé en ce que** l'inclinaison du toit **(α)** s'élève à 4 jusqu'à 6°.

11. Autobus à impériale suivant la revendication 1, **caractérisé en ce que** les parties latérales **(16 ;17)** des voussures **(15)** présentent un cintre **(21)** de α = 4 à 6°.

12. Autobus à impériale suivant la revendication 1, **caractérisé en ce que** les voussures **(15)** sont formées en cintre.

13. Autobus à impériale suivant la revendication **1, caractérisé en ce qu'**un dispositif de verrouillage et de déverrouillage par chevilles chargé par ressorts **(27)** des voussures **(15)** s'encliquète de manière sûre dans un alésage **(33)** sur la traverse de guidage **(12)** des bouts avant et arrière des glissières **(7)** et qu'il est décliquetable contre la force des ressorts.

14. Autobus à impériale suivant la revendication 1, **caractérisé en ce que** la bâche **(8)** est en matière synthétique résistant à la déchirure.

15. Autobus à impériale suivant la revendication 1, **caractérisé en ce que** les glissières **(7)** sont conçues de manière embrochable.

16. Autobus à impériale suivant la revendication 1, **caractérisé en ce que** les étais verticaux **(72)** sont conçus de manière embrochable.

17. Autobus à impériale suivant la revendication 1, **caractérisé en ce que** des dispositifs de blocage **(34)** pour la fixation de la bâche **(8)** sont disposés sur la glissière **(7)** de manière détachable.

18. Autobus à impériale suivant la revendication 1, **caractérisé en ce que** les bandes articulées **(13),** les chariots roulants **(9),** les voussures **(15)** et la bâche **(8)** peuvent être actionnés au moyen d'un dispositif de traction **(35).**

19. Autobus à impériale suivant la revendication 1, **caractérisé en ce que** le dispositif de traction **(35)** est commandé à main et/ou par moteur.

20. Autobus à impériale suivant la revendication 1, **caractérisé en ce qu'**un vitrage serré dans un profilé de cadre multicellulaire **(55)** est prévu comme élément de visibilité fermant et ouvrant **(71)** pour l'ouverture latérale **(41).**

21. Autobus à impériale suivant la revendication 1, **caractérisé en ce que** le vitrage se compose de pièces pliantes **(63)** séparées les unes des autres, mais mises les unes à côté des autres sur des coulisses **(43 ;60)** ou regroupées en un paquet **(70)** contre une butée **(75).**

22. Autobus à impériale suivant la revendication **1, caractérisé en ce que** le vitrage est en verre feuilleté ou en verre synthétique, de préférence du verre de polycarbonate.

23. Autobus à impériale suivant les revendications 1 et 20 à 22, **caractérisé en ce que** les coulisses **(43 ;60)** alignées mutuellement avec leurs ouvertures de glissement **(54 ;59),** sont disposées en superposition verticale dans l'ouverture latérale **(41),** entre lesquelles sont disposées les pièces pliantes **(63),** déplaçables à l'horizontale et chaque fois dans leur position de butée d'un côté orientables et de l'autre côté basculantes vers l'intérieur de l'impériale.

24. Autobus à impériale suivant les revendications 1 et 20 à 23, **caractérisé en ce que** la coulisse supérieure **(60)** fixée aux glissières **(7)** est formée d'un profilé en caisson **(44),** ouvert d'un côté vers l'intérieur de l'ouverture latérale **(41)** dont la paroi de caisson fermée **(46)** et tournée vers la glissière **(7)** est pourvue d'une paroi de guidage **(47)** entrant dans l'intérieur du profilé **(44a)** à laquelle est attribuée une surface de glissement intérieure **(48),** disposée verticalement par rapport à cette paroi de guidage **(47),** qui se trouve à disposition horizontale sur la paroi de caisson **(45)** détournée de la glissière **(7),** pourvue de l'ouverture de glissement **(54),** et que la coulisse inférieure **(60)** fixée au profilé d'assemblage **(42)** se compose d'un profilé en caisson **(44b),** également ouvert d'un côté vers l'intérieur de l'ouverture latérale **(41)** et présentant l'ouverture de glissement **(59).**

25. Autobus à impériale suivant les revendications 1 et 20 à 24, **caractérisé en ce que** pour chaque pièce pliante **(63)** sont prévus deux mécanismes roulants **(49 ;64)** guidés à l'intérieur par la paroi de guidage **(47),** amovibles sur la surface de glissement **(48)** et distancés l'un de l'autre, où l'un des mécanismes roulants celui arrière **(49)** tourné vers la butée **(75)** est relié de manière orientable à une goupille de guidage **(53)** fixée rigidement au profilé de cadre **(55)** de la partie supérieure de la pièce pliante **(63)** auquel est attribuée une deuxième goupille de guidage **(53)** alignée avec son axe **(D),** fixée rigidement au profilé de cadre inférieur et plongeant dans l'ouverture de glissement **(59)** de la coulisse inférieure **(60),** et que le mécanisme roulant, celui avant, **(64),** détourné de la butée **(75),** est pourvu d'une goupille de guidage **(65)** à régler, à arrêter et à débloquer pour différentes longueurs de distance **(L**_{**1-n**} **)**, au profilé de cadre supérieur **(55),** à laquelle est attribuée une autre goupille de guidage **(66)** également à régler, à arrêter et à débloquer pour différentes longueurs de distance **(L**_{**1-n**} **)**.

26. Autobus à impériale suivant les revendications 1 et 20 à 25, **caractérisé en ce que** les coulisses **(43 ;60)** présentent chaque fois un évidement **(69)** distancé de la butée **(75)** dans leur paroi de limitation latérale **(68)** située vers l'intérieur de l'impériale laquelle correspond de par son dimensionnement à la dimension du mécanisme roulant **(64)** en plus de l'épaisseur du vitrage **(V).**

27. Autobus à impériale suivant les revendications 1 et 20 à 26, **caractérisé en ce qu'**au moins les goupilles de guidage **(65 ;66)** ajustables sont pourvues d'une douille **(67).**

28. Autobus à impériale suivant les revendications 1 et 20 à 27, **caractérisé en ce que** la coulisse supérieure **(43)** présente, sur son paroi de caisson ouverte **(45)** détournée de la glissière **(7),** une rainure de fixation **(76)** dans laquelle est fixé un joint **(77)** protégeant le profilé de cadre **(55).**

29. Autobus à impériale suivant les revendications 1 et 20 à 28, **caractérisé en ce que** le profilé de cadre inférieur **(55)** présente une rainure de fixation **(78)** dans laquelle est disposé un joint **(79)** protégeant la coulisse inférieure **(60).**

30. Autobus à impériale suivant la revendication 1, **caractérisé en ce que** la coulisse inférieure **(60)** est reliée de manière reposée sur la partie de paroi horizontale **(92)** du profilé d'assemblage **(42)** et de l'aile **(93)** d'un profilé angulaire **(80)** allongeant pratiquement la partie de paroi horizontale, l'autre aile **(94)** du profilé angulaire **(80)** étant fixée sur le côté de paroi **(81),** dirigé vers le bordage intérieur **(82),** du profilé d'assemblage **(42),** et que la coulisse supérieure **(43)** est fixée directement à la partie de paroi **(74)** de la glissière **(7),** cette partie étant disposée à l'horizontale et détournée de la traverse de guidage **(12).**

31. Autobus à impériale suivant la revendication 1, **caractérisé en ce qu'**une feuille **(83)** comme élément de visibilité **(71)** s'étendant entièrement ou partiellement sur la longueur de l'ouverture latérale **(41),** est prévue qui est fixée de manière à pouvoir être enroulée et déroulée sur un listel en feuille synthétique **(84)** attachée à la glissière **(7).**

32. Autobus à impériale suivant les revendications 1 et 31, **caractérisé en ce que** la feuille **(83)** déroulée est conçue à pouvoir être accrochée au profilé d'assemblage **(42).**

33. Autobus à impériale suivant la revendication 1, **caractérisé en ce que** plusieurs stores **(89)** comme élément de visibilité **(71)** sont prévus, disposés à l'horizontale les uns à côté des autres dans l'ouverture latérale **(41),** les bords de côté verticaux **(86)** desquels sont guidés dans des glissières de guidage **(87)** disposés verticalement entre la glissière **(7)** et le profilé d'assemblage **(42).**

34. Autobus à impériale suivant la revendication 1, **caractérisé en ce que** plusieurs stores **(89)** comme élément de visibilité **(71)** sont disposés à la verticale les uns à côté des autres dans l'ouverture latérale **(41),** les bords horizontaux desquels sont reliés par fermeture velcro.

35. Autobus à impériale suivant les revendications 1 à 34, **caractérisé en ce que** la partie couverte par toiture du compartiment des passagers s'étend au moins à 25 jusqu'à 75 % maxi de sa longueur, la partie sans toiture étant conçue à ouverture latérale.
